(19) Europäisches Patentamt
European Patent Office
Office européen des brevets

(11) EP 4 036 131 B1

(12) EUROPEAN PATENT SPECIFICATION

(45) Date of publication and mention of the grant of the patent:
**02.08.2023 Bulletin 2023/31**

(21) Application number: **20868792.1**

(22) Date of filing: **31.08.2020**

(51) International Patent Classification (IPC):
***C08F 220/10*** *(2006.01)* ***C08F 2/00*** *(2006.01)*
***B41J 2/01*** *(2006.01)* ***C09D 11/38*** *(2014.01)*
***B41M 5/00*** *(2006.01)* ***C08J 7/00*** *(2006.01)*
***C09D 11/101*** *(2014.01)* ***B41M 7/00*** *(2006.01)*
***C09D 11/36*** *(2014.01)* ***C09D 11/40*** *(2014.01)*
***C09K 19/58*** *(2006.01)* ***C09K 19/04*** *(2006.01)*

(52) Cooperative Patent Classification (CPC):
**C09D 11/101; B41J 2/01; C08F 2/00; C08F 220/10; C08J 7/00; C09D 11/36; C09D 11/38; C09D 11/40; C09K 19/586;** B41M 7/00; B41M 7/0072; C09K 2019/0448

(86) International application number:
**PCT/JP2020/032947**

(87) International publication number:
**WO 2021/059879 (01.04.2021 Gazette 2021/13)**

(54) **IMAGE RECORDING METHOD**

BILDAUFZEICHNUNGSVERFAHREN

PROCÉDÉ D'ENREGISTREMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2019 JP 2019177119**

(43) Date of publication of application:
**03.08.2022 Bulletin 2022/31**

(73) Proprietor: **FUJIFILM Corporation**
**Tokyo 106-8620 (JP)**

(72) Inventors:
- **TAKAHASHI, Koki**
**Ashigarakami-gun, Kanagawa 258-8577 (JP)**
- **MAKUTA, Toshiyuki**
**Ashigarakami-gun, Kanagawa 258-8577 (JP)**

(74) Representative: **Klunker IP Patentanwälte PartG mbB**
**Destouchesstraße 68**
**80796 München (DE)**

(56) References cited:
**WO-A1-2011/010500**
**JP-A- 2011 191 582**
**JP-A- 2013 113 913**
**JP-A- 2013 512 800**
**JP-A- 2013 513 000**
**US-A1- 2012 223 272**
**US-A1- 2018 100 103**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 036 131 B1

## Description

BACKGROUND OF THE INVENTION

1. Field of the Invention

The present disclosure relates to an image recording method.

2. Description of the Related Art

In recent years, an image recording method using an ink containing a liquid crystal compound has been proposed. Cholesteric liquid crystals prepared by adding a chiral agent to a liquid crystal compound have unique light reflectivity which enables the liquid crystals to change tone depending on the viewing angle. In a case where an ink containing a liquid crystal compound is used, it is possible to record a special image that is invisible in other image recording materials. Therefore, such an ink is expected to be applied to special decorations for articles such as packaging materials and security printing. Particularly, it is expected that a wide variety of colors could be expressed by superimposing the ink images. Furthermore, it is expected that more complicated images could be expressed by recording the ink images by an inkjet recording method.

As a technique for laminating cholesteric liquid crystal layers, for example, WO2017/010560A discloses a film manufacturing method including applying a liquid crystal composition containing a polymerizable liquid crystal compound to the surface of a layer formed by curing a liquid crystal composition and curing the applied liquid crystal composition. Furthermore, WO2017/057316A discloses an optical film manufacturing method including a step of applying a coating liquid of a discotic liquid crystal composition 1 to a rubbed alignment film and irradiating the applied coating liquid with ultraviolet rays so as to obtain an underlayer and a step of applying a coating liquid of a discotic liquid crystal composition 2 to the underlayer and irradiating the applied coating liquid with ultraviolet rays. WO2017/007007A discloses a film including at least three layers obtained by curing a polymerizable composition, in which the three layers consist of a layer that is obtained by fixing a cholesteric liquid crystalline phase having a central wavelength of selective reflection in a wavelength region of red light, a layer that is obtained by fixing a cholesteric liquid crystalline phase having a central wavelength of selective reflection in a wavelength region of green light, and a layer that is obtained by fixing a cholesteric liquid crystalline phase having a central wavelength of selective reflection in a wavelength region of blue light.

SUMMARY OF THE INVENTION

However, in a case where ink images are superimposed, sometimes a phenomenon called "cissing" occurs in which an ink image recorded earlier repels an ink image recorded later. Especially, during image recording using an inkjet recording method, cissing is more likely to occur because images are recorded by jetting of micro-sized ink droplets. None of WO2017/010560A, WO2017/057316A, and WO2017/007007A examine the occurrence of cissing during image recording using an inkjet recording method.

The present disclosure has been made in consideration of these circumstances. According to the present disclosure, there is provided an image recording method capable of suppressing the occurrence of cissing during image recording using an inkjet recording method.

The present disclosure refers to an image recording method including a step of preparing at least two ink compositions including a first ink composition that comprises a polymerizable liquid crystal compound, a chiral compound, a polymerization initiator, and an organic solvent and a second ink composition that contains a polymerizable liquid crystal compound, a chiral compound, a polymerization initiator, and an organic solvent, a step of applying the first ink composition onto a substrate by an inkjet recording method, a step of forming a first ink film by irradiating the first ink composition applied onto the substrate with an active energy ray, a step of applying the second ink composition onto the first ink film by an inkjet recording method, and a step of forming a second ink film by irradiating the second ink composition applied onto the first ink film with an active energy ray, in which the first ink film has a hexadecane-contacting angle of 45° or less.

According to the present disclosure, it is possible to provide an image recording method capable of suppressing the occurrence of cissing during image recording using an inkjet recording method.

DESCRIPTION OF THE PREFERRED EMBODIMENTS

Hereinafter, the image recording method of the present disclosure will be specifically described.

In the present specification, a range of numerical values described using "to" means a range including numerical values described before and after "to" as a minimum value and a maximum value, respectively.

Regarding the ranges of numerical values described stepwise in the present specification, the upper limit or the lower limit described in a certain range of numerical values may be replaced with the upper limit or the lower limit of another range of numerical values described stepwise. In addition, in the ranges of numerical values described in the present specification, the upper limit or the lower limit described in a certain numerical range may be replaced with the value shown in Examples.

In the present specification, in a case where there is a plurality of substances in a composition that corresponds to each component of the composition, unless otherwise specified, the amount of each component of the composition means the total amount of the plurality of substances present in the composition.

In the present specification, a combination of two or more preferred embodiments is a more preferred embodiment.

In the present specification, the term "step" includes not only an independent step but also a step which is not clearly distinguished from another step as long as the intended purpose of the step is achieved.

[Image recording method]

The image recording method of the present disclosure includes a step of preparing at least two ink compositions including a first ink composition that contains a polymerizable liquid crystal compound, a chiral compound, a polymerization initiator, and an organic solvent and a second ink composition that contains a polymerizable liquid crystal compound, a chiral compound, a polymerization initiator, and an organic solvent, a step of applying the first ink composition onto a substrate by an inkjet recording method, a step of forming a first ink film by irradiating the first ink composition applied onto the substrate with an active energy ray, a step of applying the second ink composition onto the first ink film by an inkjet recording method, and a step of forming a second ink film by irradiating the second ink composition applied onto the first ink film with an active energy ray, in which the first ink film has a hexadecane-contacting angle of 45° or less.

In a case where ink images are superimposed, sometimes a phenomenon called "cissing" occurs in which an ink image recorded earlier repels an ink image recorded later. WO2017/010560A, WO2017/057316A, and WO2017/007007A describe a method of superimposing liquid crystal layers by applying a composition containing a liquid crystal compound with a wire bar. However, none of these documents disclose a study on image recording using an inkjet recording method. Especially, during image recording using an inkjet recording method, cissing is more likely to occur because images are recorded by jetting of micro-sized ink droplets. Therefore, it is considered that in a case where the coating method described in WO2017/010560A, WO2017/057316A, and WO2017/007007A is applied to the inkjet recording method, the occurrence of cissing will not be fully suppressed.

On the other hand, in the image recording method of the present disclosure, because the first ink film is has a hexadecane-contacting angle of 45° or less, the affinity between the first ink film and the second ink composition is improved, and the occurrence of cissing is suppressed.

In the present disclosure, a hexadecane-contacting angle is measured at 25°C with a contact angle meter by adding hexadecane dropwise to a measurement region. The hexadecane-contacting angle is measured using, for example, a contact angle meter (trade name "Drop master 500", manufactured by Kyowa Interface Science Co., Ltd.).

Hereinafter, each step in the image recording method of the present disclosure will be described.

<Ink preparation step>

The image recording method of the present disclosure includes a step of preparing at least two ink compositions including a first ink composition that contains a polymerizable liquid crystal compound, a chiral compound, a polymerization initiator, and an organic solvent and a second ink composition that contains a polymerizable liquid crystal compound, a chiral compound, a polymerization initiator, and an organic solvent (hereinafter, also called "ink preparation step"). That is, both the first ink composition and second ink composition contain a polymerizable liquid crystal compound, a chiral compound, a polymerization initiator, and an organic solvent. The first ink composition and the second ink composition may be the same or different. "The first ink composition and the second ink composition are the same" means that the type and content of the components contained in the first ink composition are the same as the type and content of the components contained in the second ink composition. "The first ink composition and the second ink composition are different" means that the components contained in the first ink composition are different from the components contained in the second ink composition in terms of at least one of the type or content.

The first ink composition contains, for example, a first polymerizable liquid crystal compound, a first chiral compound, a first polymerization initiator, and a first organic solvent. The second ink composition contains, for example, a second polymerizable liquid crystal compound, a second chiral compound, a second polymerization initiator, and a second organic solvent. The first polymerizable liquid crystal compound and the second polymerizable liquid crystal compound may be the same or different. The first chiral compound and the second chiral compound may be the same or different. The first polymerization initiator and the second polymerization initiator may be the same or different. The

first organic solvent and the second organic solvent may be the same or different.

Hereinafter, the first polymerizable liquid crystal compound and the second polymerizable liquid crystal compound will be simply described as "polymerizable liquid crystal compound". The first chiral compound and the second chiral compound will be simply described as "chiral compound". The first polymerization initiator and the second polymerization initiator will be simply described as "polymerization initiator". The first organic solvent and the second organic solvent will be simply described as "organic solvent". Furthermore, in a case where the same description can be applied to the first ink composition and the second ink composition, these compositions will be simply described as "ink composition".

In the ink preparation step, a first ink composition and a second ink composition are prepared. In this step, another ink composition (for example, a third ink composition) may be additionally prepared. The another ink composition may be the same as or different from the first ink composition or the second ink composition. Furthermore, the another ink composition may be an ink composition that contains a polymerizable liquid crystal compound, a chiral compound, a polymerization initiator, and an organic solvent, or may be an ink composition that contains components different from these components.

In a case where the third ink composition contains a polymerizable liquid crystal compound, a chiral compound, a polymerization initiator, and an organic solvent, the third ink composition contains, for example, a third polymerizable liquid crystal compound, a third chiral compound, a third polymerization initiator, and a third organic solvent. The third polymerizable liquid crystal compound may be the same as or different from any one of the first polymerizable liquid crystal compound and the second polymerizable liquid crystal compound. The third chiral compound may be the same as or different from any one of the first chiral compound and the second chiral compound. The third polymerization initiator may be the same as or different from any one of the first polymerization initiator and the second polymerization initiator. The third organic solvent may be the same as or different from any one of the first organic solvent and the second organic solvent.

(Polymerizable liquid crystal compound)

Hereinafter, the polymerizable liquid crystal compound contained in the ink composition will be described.

In the present disclosure, the polymerizable liquid crystal compound is a liquid crystal compound having a polymerizable group.

The liquid crystal compound may be a rod-like liquid crystal compound or a disk-like liquid crystal compound, but is preferably a rod-like liquid crystal compound.

Examples of the rod-like liquid crystal compound include a rod-like nematic liquid crystal compound. As the rod-like nematic liquid crystal compound, an azomethine compound, an azoxy compound, a cyanobiphenyl compound, a cyanophenyl ester compound, a benzoic acid ester, a cyclohexanecarboxylic acid phenyl ester, a cyanophenylcyclohexane compound, a cyano-substituted phenylpyrimidine compound, an alkoxy-substituted phenylpyrimidine compound, a phenyldioxane compound, a tolan compound, or an alkenylcyclohexylbenzonitrile compound is preferably used. As the rod-like liquid crystal compound, not only low-molecular-weight liquid crystal compounds but also high-molecular-weight liquid crystal compounds can be used.

The polymerizable liquid crystal compound can be obtained by introducing a polymerizable group into a liquid crystal compound. Examples of the polymerizable group include a polymerizable unsaturated group, an epoxy group, and an aziridinyl group. As the polymerizable group, especially, a polymerizable unsaturated group is preferable, and an ethylenically unsaturated group is particularly preferable. The number of polymerizable groups contained in the polymerizable liquid crystal compound is preferably 1 to 6, and more preferably 1 to 3. From the viewpoint of the durability of the image to be obtained, the polymerizable liquid crystal compound more preferably has two polymerizable groups in a molecule.

Examples of the polymerizable liquid crystal compound include the compounds described in Makromol. Chem., vol. 190, p. 2255 (1989), Advanced Materials, vol. 5, p. 107 (1993), US4683327A, US5622648A, US5770107A, WO95/22586A, WO95/24455A, WO97/00600A, WO98/23580A, WO98/52905A, JP1989-272551A (JP-H01-272551A), JP1994-16616A (JP-H06-16616A), JP1995-110469A (JP-H07-110469A), JP1999-80081A (JP-H11-80081A), and JP2001-328973A.

Specific examples of the polymerizable liquid crystal compound include the following compounds (1) to (17). The polymerizable liquid crystal compound is not limited to the following examples.

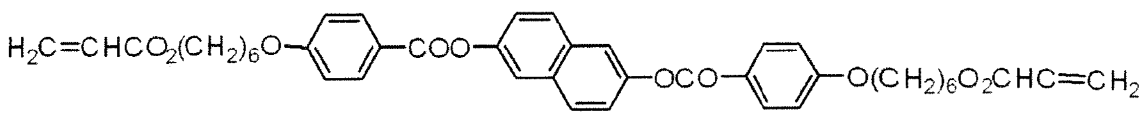

(1)

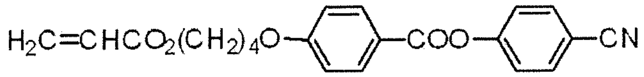

(2)

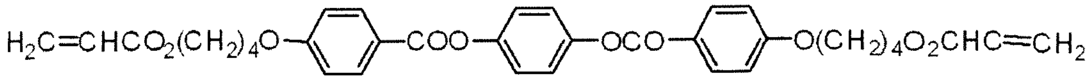

(3)

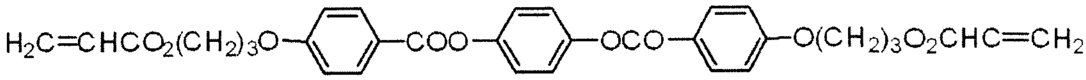

(4)

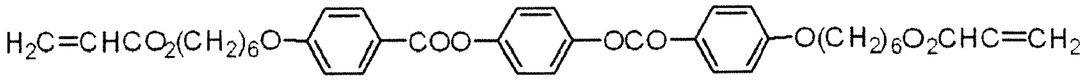

(5)

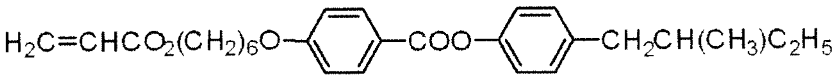

(6)

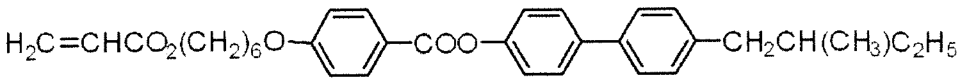

(7)

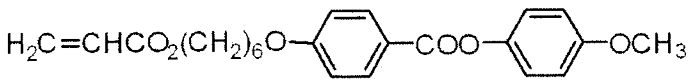

(8)

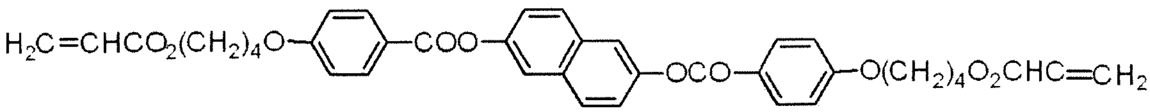

(9)

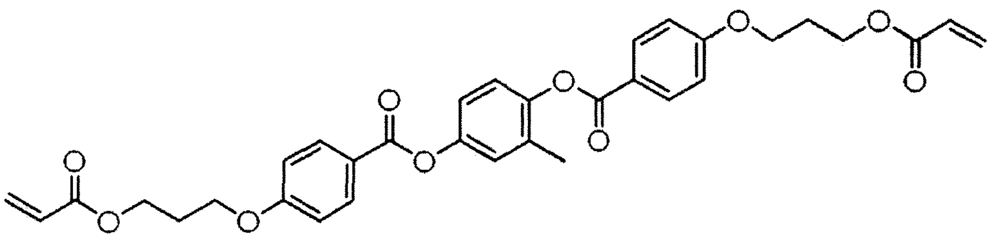

(10)

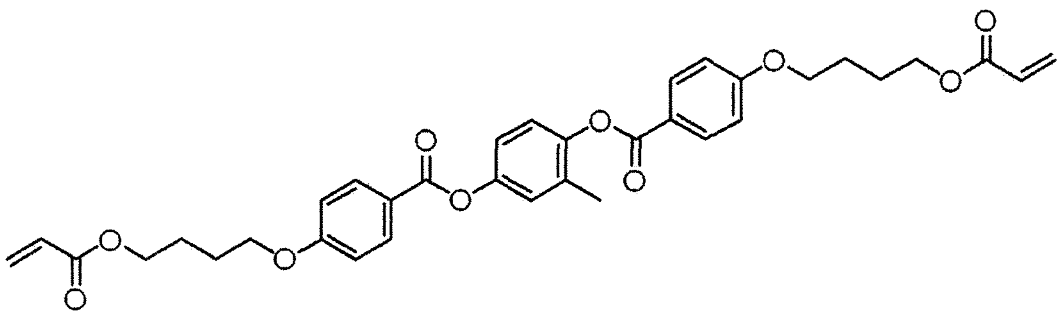

(11)

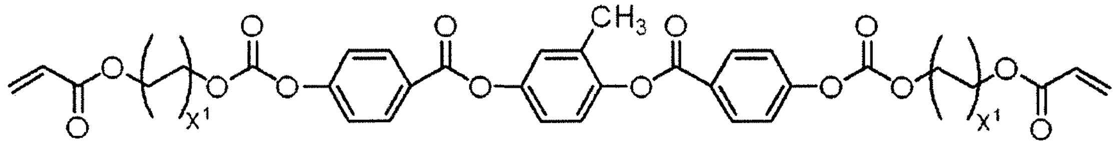
(12)

In the compound (12), $X^1$ each independently represents an integer of 2 to 5.

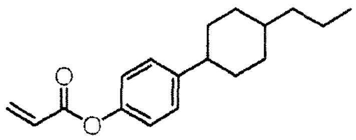
(13)

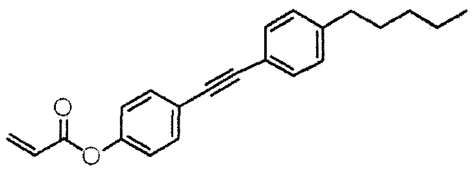
(14)

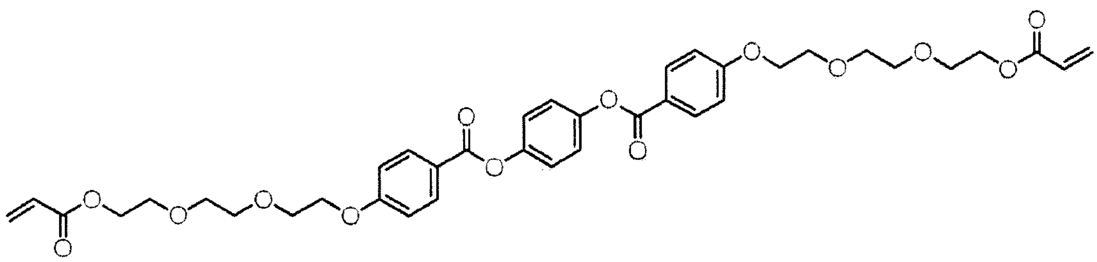
(15)

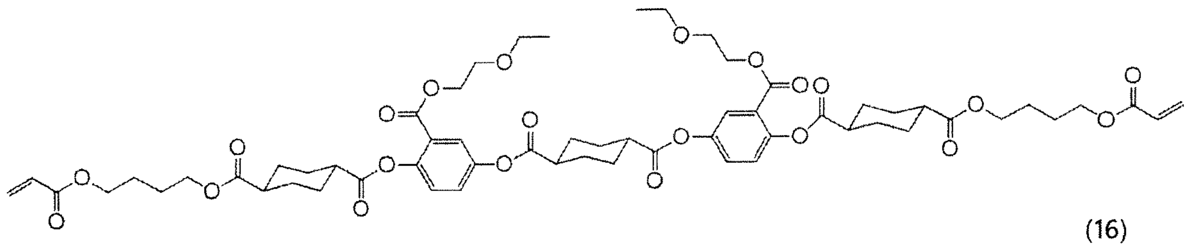
(16)

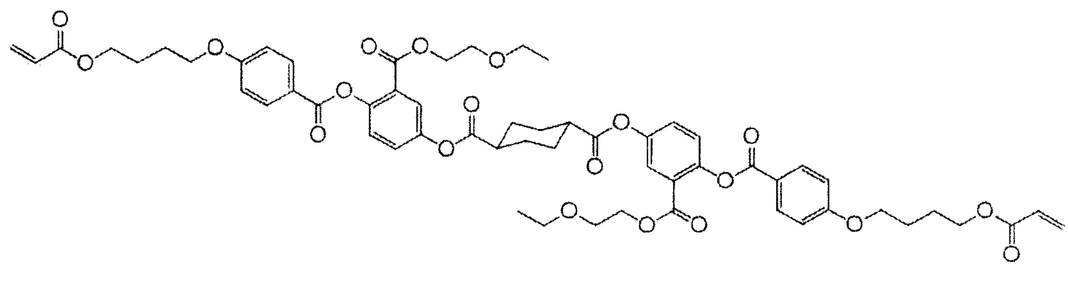
(17)

Examples of the polymerizable liquid crystal compound other than those exemplified above include the cyclic organopolysiloxane compounds disclosed JP1982-165480A (JP-S57-165480A).

The ink composition may contain only one kind of polymerizable liquid crystal compound or two or more kinds of the polymerizable liquid crystal compounds.

Particularly, it is preferable that each of the first ink composition and the second ink composition contain two or more kinds of different polymerizable liquid crystal compounds. In a case where two or more kinds of polymerizable liquid crystal compounds are used, color reproducibility can be further improved.

The content of the polymerizable liquid crystal compound with respect to the total amount of the ink composition is preferably 1% by mass to 70% by mass, more preferably 5% by mass to 60% by mass, and particularly preferably 20% by mass to 45% by mass.

In the present disclosure, from the viewpoint of improving color reproducibility, it is preferable that the first ink composition and the second ink composition be different from each other in terms of at least one of the type of polymerizable liquid crystal compound or the content of polymerizable liquid crystal compound. The pitch of the helical structure of the cholesteric liquid crystals derived from the polymerizable liquid crystal compound and the wavelength of light to be selectively reflected vary with the type of the polymerizable liquid crystal compound. By varying the type of the polymerizable liquid crystal compounds, it is possible to obtain ink films of different color tones. Furthermore, by varying the content of the polymerizable liquid crystal compounds, it is possible to vary the mixing ratio of the polymerizable liquid crystal compounds to the chiral compound and to obtain ink films of different color tones.

(Chiral compound)

Hereinafter, the chiral compound contained in the ink composition will be described.

The chiral compound is also called an optically active compound. The chiral compound has a function of inducing the helical structure of the polymerizable liquid crystal compound. The twist direction or pitch of the induced helical structure varies with the type of the chiral compound.

As the chiral compound, known compounds can be used without particular limitations (for example, see Liquid Crystal Device Handbook, Chapter 3, Section 4-3, Chiral Agent for TN and STN, p. 199, edited by the 142nd Committee of Japan Society for the Promotion of Science, 1989). Examples of the chiral compound include isosorbide derivatives and isomannide derivatives.

The chiral compound generally contains an asymmetric carbon atom. However, the chiral compound may not contain an asymmetric carbon atom as long as the compound has chirality. Examples of the chiral compound include an axially chiral compound having a binaphthyl structure, a helically chiral compound having a helicene structure, and a planarly chiral compound having a cyclophane structure.

The chiral compound may have a polymerizable group. In a case where the chiral compound has a polymerizable group, by a polymerization reaction between the chiral compound and the polymerizable liquid crystal compound, a polymer is formed which has a structural unit derived from the polymerizable liquid crystal compound and a structural unit derived from the chiral compound. In a case where the chiral compound has a polymerizable group, the polymerizable group is preferably the same type of group as the polymerizable group contained in the polymerizable liquid crystal compound. Therefore, the polymerizable group in the chiral compound is preferably a polymerizable unsaturated group, an epoxy group, or an aziridinyl group, more preferably a polymerizable unsaturated group, and particularly preferably an ethylenically unsaturated group. Furthermore, the chiral compound itself may be a liquid crystal compound.

Specific examples of the chiral compound include the following compounds, but the chiral compound that can be used in the ink composition is not limited to the following examples. "Me" in each compound means a methyl group.

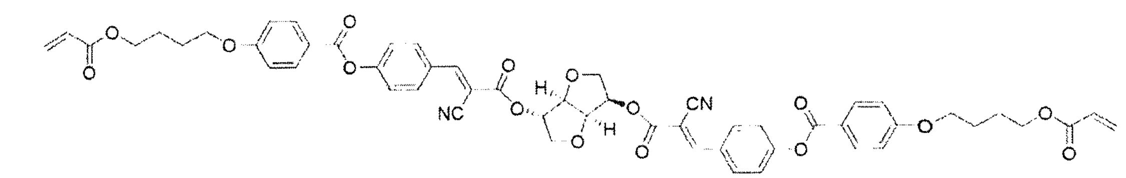

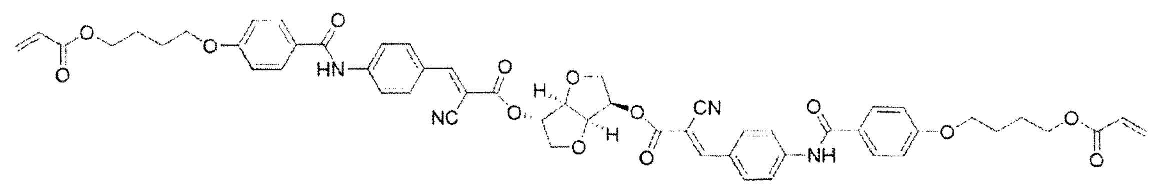

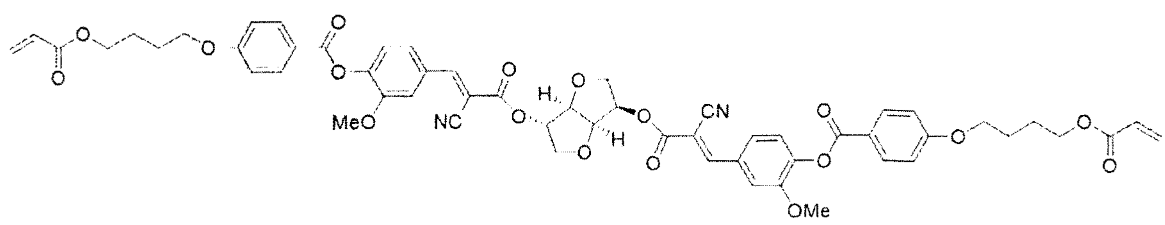

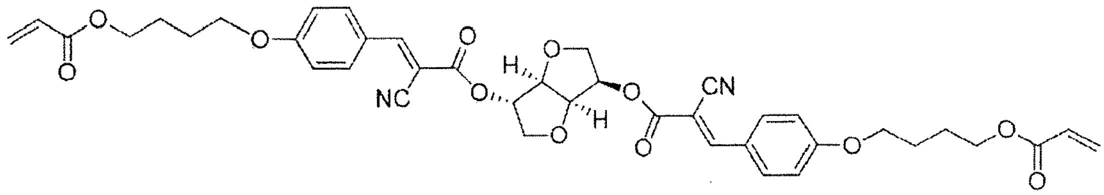

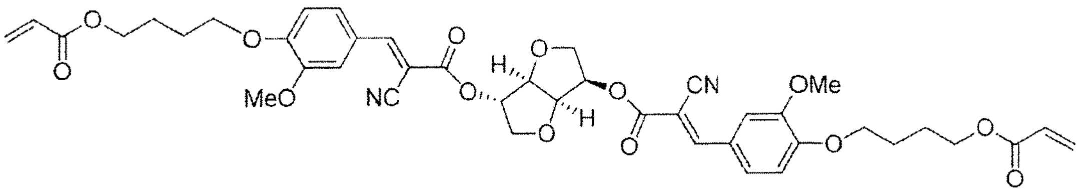

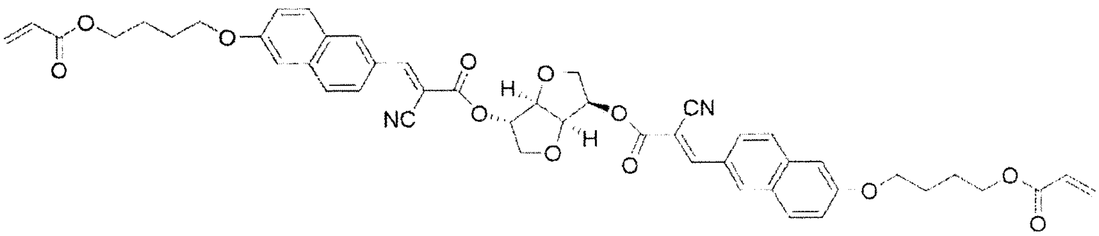

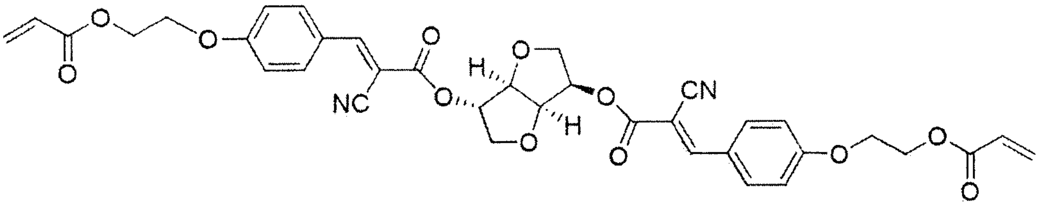

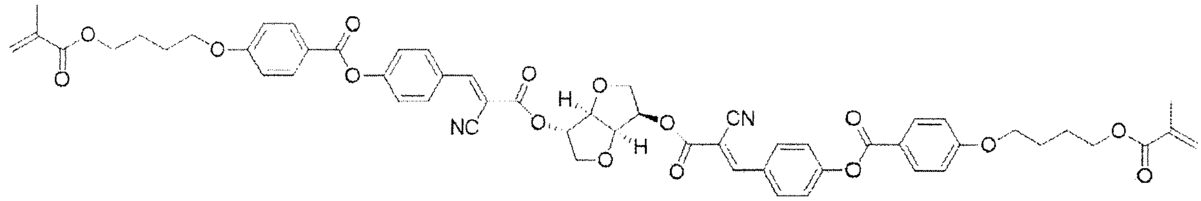

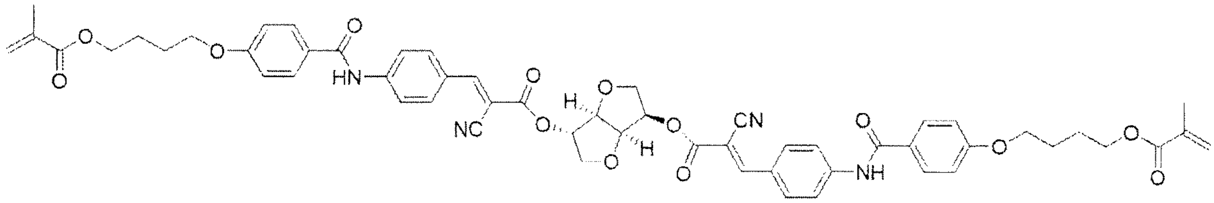

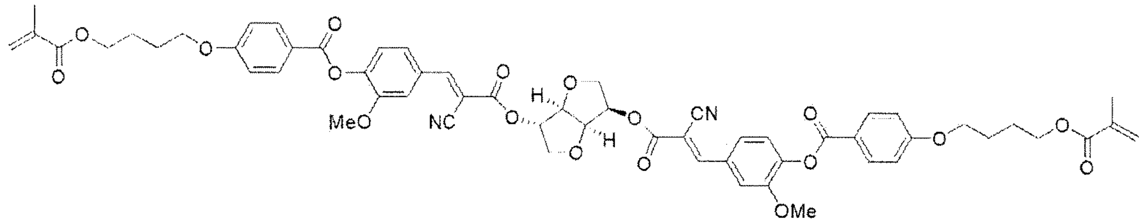

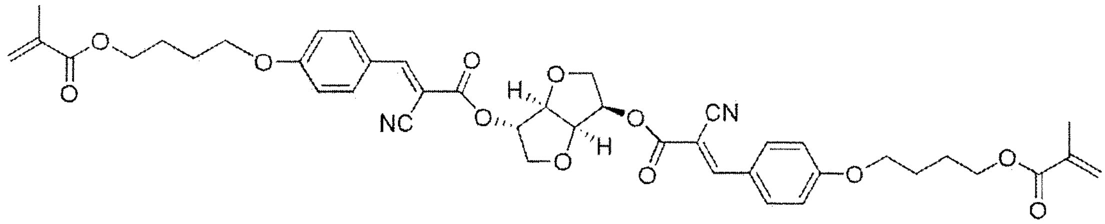

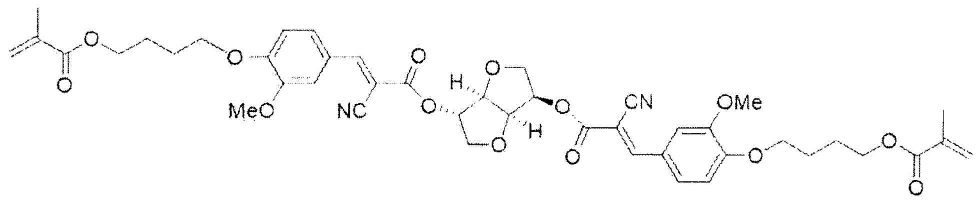

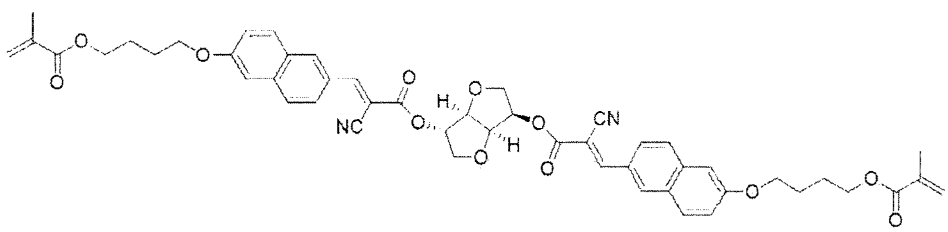

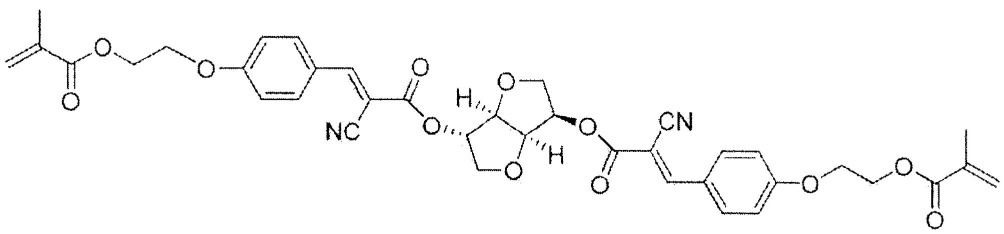

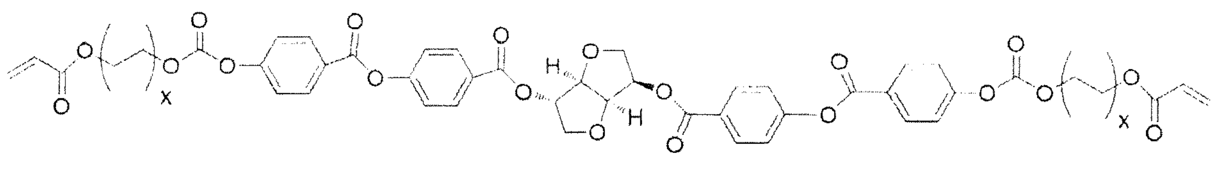

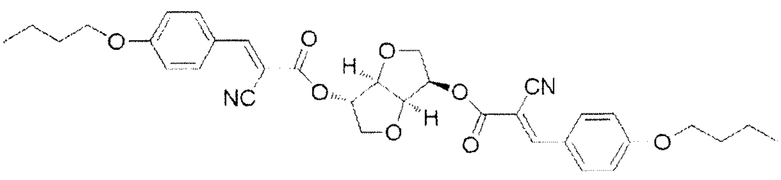

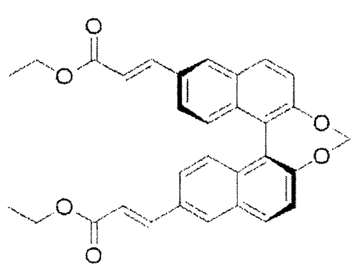

In the above compounds, X each independently represents an integer of 2 to 5.

In the ink composition, the content of the chiral compound with respect to the content of 100 parts by mass of the polymerizable liquid crystal compound is preferably 1 part by mass to 15 parts by mass, and more preferably 3 parts by mass to 10 parts by mass.

It is preferable that the content of the chiral compound vary between the first ink composition and the second ink composition. The pitch of the helical structure of the cholesteric liquid crystals derived from the polymerizable liquid crystal compound and the wavelength of light to be selectively reflected vary with the content of the chiral compound. By varying the content of the chiral compounds, it is possible to obtain ink films of different color tones. The larger the content of the chiral compound is, the shorter the reflection wavelength tends to be. The smaller the content of the chiral compound is, the longer the reflection wavelength tends to be.

(Polymerization initiator)

Hereinafter, the polymerization initiator contained in the ink composition will be described.

The polymerization initiator is preferably a photopolymerization initiator, and more preferably a polymerization initiator having a function of generating radicals by irradiation with ultraviolet rays.

Examples of the photopolymerization initiator include an alkylphenone-based photopolymerization initiator, an acylphosphine oxide-based photopolymerization initiator, an intramolecular hydrogen abstraction-type photopolymerization initiator, an oxime ester-based photopolymerization initiator, and a cationic photopolymerization initiator. As the photopolymerization initiator, especially, an acylphosphine oxide-based photopolymerization initiator is preferable. Specifically, (2,4,6-trimethylbenzoyl)diphenylphosphine oxide or bis(2,4,6-trimethylbenzoyl)phenylphosphine oxide is preferable.

In the ink composition, the content of the polymerization initiator with respect to the content of 100 parts by mass of the polymerizable liquid crystal compound is preferably 0.1 parts by mass to 20 parts by mass, and more preferably 0.5 parts by mass to 12 parts by mass.

(Organic solvent)

Hereinafter, the organic solvent contained in the ink composition will be described.

The type of organic solvent is not particularly limited and can be appropriately selected depending on the purpose.

Examples of the organic solvent include a ketone-based solvent, an alkyl halide-based solvent, an amide-based solvent, a sulfoxide-based solvent, a heterocyclic compound, a hydrocarbon-based solvent, an ester-based solvent, and an ether-based solvent.

The content of the organic solvent with respect to the total amount of the ink composition is preferably 20% by mass to 80% by mass, more preferably 40% by mass to 75% by mass, and even more preferably 50% by mass to 70% by mass.

In the ink composition, from the viewpoint of jettability, the content of an organic solvent having a boiling point of 80°C to 300°C with respect to the total amount of organic solvents is preferably 30% by mass or more, more preferably 50% by mass or more, and even more preferably 70% by mass or more. The boiling point of the organic solvent is preferably in a range of 100°C to 280°C, and more preferably in a range of 130°C to 250°C. There is no particular limit on the upper limit of the content of the organic solvent having a boiling point of 100°C to 300°C with respect to the total amount of organic solvents. For example, the upper limit is 100% by mass. It is particularly preferable that all the organic solvents contained in the ink composition be organic solvents having a boiling point of 80°C to 300°C.

Examples of the organic solvent having a boiling point of 80°C to 300°C include

polyhydric alcohol such as ethylene glycol (boiling point: 198°C), propylene glycol (boiling point: 188°C), 1,2-butanediol (boiling point: 194°C), 2,3-butanediol (boiling point: 183°C), 2-methyl-1,3-propanediol (boiling point: 124°C), 2-methyl-2,4-pentanediol (boiling point: 198°C), 1,2,6-hexanetriol (boiling point: 178°C), 1,2,3-butanetriol (boiling point: 175°C), 1,2,4-butanetriol (boiling point: 170°C), diethylene glycol (boiling point: 244°C), dipropylene glycol (boiling point: 231°C), 1,3-propanediol (boiling point: 214°C), 1,3-butanediol (boiling point: 208°C), 1,4-butanediol (boiling point: 230°C), 1,2-pentanediol (boiling point: 206°C), 2,4-pentanediol (boiling point: 201°C), 2-methyl-1,3-butanediol (boiling point: 203°C), 3-methyl-1,3-butanediol (boiling point: 203°C), 1,5-pentanediol (boiling point: 242°C), 2,2-dimethyl-1,3-propanediol (boiling point: 208 °C), 1,2-hexanediol (boiling point: 223°C), 1,6-hexanediol (boiling point: 250°C), 2,5-hexanediol (boiling point: 217°C), 2-ethyl-1,3-hexanediol (boiling point: 243°C), triethylene glycol (boiling point: 287°C), tripropylene glycol (boiling point: 273°C), and glycerin (boiling point: 290°C);

polyhydric alcohol alkyl ether such as ethylene glycol dimethyl ether (boiling point: 85°C), ethylene glycol monomethyl ether (boiling point: 124°C), ethylene glycol monoethyl ether (boiling point: 135°C), ethylene glycol-n-propyl ether

(boiling point: 150°C), ethylene glycol monobutyl ether (boiling point: 171°C), propylene glycol monoethyl ether (boiling point: 133°C), propylene glycol-n-butyl ether (boiling point: 171°C), propylene glycol-t-butyl ether (boiling point: 153°C), tetraethylene glycol monomethyl ether (boiling point: 159°C), diethylene glycol methyl ether (boiling point: 194°C), diethylene glycol diethyl ether (boiling point: 162°C), diethylene glycol-n-butyl ether (boiling point: 171°C), dipropylene glycol monomethyl ether (boiling point: 188°C), diethylene glycol monoethyl ether (boiling point: 202°C), diethylene glycol monobutyl ether (boiling point: 230°C), triethylene glycol methyl ether (boiling point: 249°C), dipropylene glycol-n-propyl ether (boiling point: 213°C), tripropylene glycol methyl ether (boiling point: 243°C), triethylene glycol ethyl ether (boiling point: 256°C), diethylene glycol-n-hexyl ether (boiling point: 259°C), and tripropylene glycol-n-propyl ether (boiling point: 261°C);

polyhydric alcohol aryl ether such as ethylene glycol phenyl ether (boiling point: 237°C), propylene glycol phenyl ether (boiling point: 243°C), and ethylene glycol monobenzyl ether (boiling point: 256°C);

nitrogen-containing compounds such as ε-caprolactam (boiling point: 137°C), N-methylformamide (boiling point: 199°C), N,N-dimethylformamide (boiling point: 153°C), N-methyl-2-pyrrolidone (boiling point: 204°C), 2-pyrrolidone (boiling point: 245°C), 1,3-dimethylimidazolidinone (boiling point: 220°C), and N-methylpyrrolidinone (boiling point: 202°C);

ester compounds such as propylene glycol monomethyl ether acetate (boiling point: 146°C) and 3-methoxybutyl acetate (boiling point: 172°C); and

ketone compounds such as diacetone alcohol (boiling point: 169°C) and γ-butyrolactone (boiling point: 204°C). Among these, from the viewpoint of storage stability and jettability, diethylene glycol diethyl ether, ethylene glycol monomethyl ether, 3-methoxybutyl acetate, or γ-butyrolactone is preferable as the organic solvent.

(Surfactant)

The ink composition may further contain a surfactant. Particularly, in order that the first ink film has a hexadecane-contacting angle of 45° or less, it is preferable that the first ink composition contain a surfactant.

In a case where the ink composition contains a surfactant, the polymerizable liquid crystal compound molecules are horizontally aligned on the air interface side in the cured ink composition, and the directions of the helical axes are more uniformly controlled. As the surfactant, a compound is preferable which can function as an alignment control agent stably or rapidly establishing a cholesteric structure with planar alignment. Examples of the surfactant include a hydrocarbon surfactant, a silicone surfactant, and a fluorine surfactant.

The ink composition may contain only one kind of surfactant or two or more kinds of surfactants.

As one aspect, it is preferable that the first ink composition further contain a fluorine surfactant. In order that the first ink film has a hexadecane-contacting angle of 45° or less, the content of the fluorine surfactant with respect to the total amount of the first ink composition is preferably 0.005% by mass to 0.02% by mass, and more preferably 0.005% by mass to 0.01% by mass. In a case where the content of the fluorine surfactant is within the above range, the affinity between the first ink film and the second ink composition is improved, and the occurrence of cissing is suppressed.

Examples of commercially available fluorine surfactants include MEGAFACE F-171, F-172, F-173, F-176, F-177, F-141, F-142, F-143, F-144., F-437, F-475, F-477, F-479, F-482, F-551-A, F-552, F-554, F-555-A, F-556, F-557, F -558, F-559, F-560, F-561, F-565, F-563, F-568, F-575, F-780, EXP, MFS-330, R-41, R-41-LM, R-01, R-40, R-40-LM, RS-43, TF-1956, RS-90, R-94, RS-72-K, and DS-21 (all of these are manufactured by DIC Corporation); FLUORAD FC430, FC431, and FC171 (all of these are manufactured by Sumitomo 3M Ltd.); SURFLON S-382, SC-101, SC-103, SC-104, SC-105, SC-1068, SC-381, SC-383, S-393, and KH-40 (all of these are manufactured by AGC Inc.); PolyFox PF636, PF656, PF6320, PF6520, and PF7002 (all of these are manufactured by OMNOVA Solutions); and FTERGENT 710FM, 610FM, 601 AD, 601ADH2, 602A, 215M, 245F, and 208G (all of these are manufactured by NEOS COMPANY LIMITED).

The fluorine surfactant may be a polymer of a fluorine-containing vinyl ether compound having a fluorinated alkyl group or a fluorinated alkylene ether group and a hydrophilic vinyl ether compound.

Furthermore, the fluorine surfactant may be a block polymer. The fluorine surfactant may be a fluorine-containing polymer having a constitutional unit that is derived from a (meth)acrylate compound having a fluorine atom and a constitutional unit that is derived from a (meth)acrylate compound having 2 or more (preferably 5 or more) alkylene oxide chains (preferably ethylene oxide chains or propylene oxide chains).

The fluorine surfactant may be a crosslinkable fluorine surfactant having a crosslinkable group. Examples of the crosslinkable group include a polymerizable unsaturated group, an epoxy group, and an aziridinyl group. As the polymerizable group, especially, a polymerizable unsaturated group is preferable, and an ethylenically unsaturated group is particularly preferable.

As another aspect, it is preferable that the first ink composition further contain a silicone surfactant. The content of the silicone surfactant with respect to the total amount of the first ink composition is preferably 0.005% by mass to 0.3% by mass, and more preferably 0.005% by mass to 0.015% by mass. In a case where the content of the silicone

surfactant is within the above range, the affinity between the first ink film and the second ink composition is improved, and the occurrence of cissing is suppressed.

Examples of the silicone surfactant include a linear polymer composed of a siloxane bond and a modified polysiloxane having an organic group introduced into a side chain or a terminal.

Examples of commercially available silicone surfactants include DOWSIL 8032 ADDITIVE, TORAY SILICONE DC3PA, TORAY SILICONE SH7PA, TORAY SILICONE DC11PA, TORAY SILICONE SH21PA, TORAY SILICONE SH28PA, TORAY SILICONE SH29PA, TORAY SILICONE SH30PA, and TORAY SILICONE SH8400 (all of these are manufactured by Dow Corning Toray Co. Ltd.); X-22-4952, X-22-4272, X-22-6266, KF-351A, K354L, KF-355A, KF-945, KF-640, KF-642, KF-643, X-22-6191, X-22-4515, KF-6004, KP-341, KF-6001, and KF-6002 (all of these are manufactured by Shin-Etsu Chemical Co., Ltd.); F-4440, TSF-4300, TSF-4445, TSF-4460, and TSF-4452 (all of these are manufactured by Momentive Performance Materials Inc.); and BYK-307, BYK-323, BYK-330, BYK-UV3500, and BYK-UV3505 (all of these are manufactured by BYK CHEMIE JAPAN K.K.).

The silicone surfactant may be a crosslinkable silicone surfactant having a crosslinkable group. Examples of the crosslinkable group include a polymerizable unsaturated group, an epoxy group, and an aziridinyl group. As the polymerizable group, especially, a polymerizable unsaturated group is preferable, and an ethylenically unsaturated group is particularly preferable.

As another aspect, it is preferable that the first ink composition further contain a hydrocarbon surfactant. The content of the hydrocarbon surfactant with respect to the total amount of the first ink composition is preferably 0.005% by mass to 0.3% by mass, and more preferably 0.005% by mass to 0.015% by mass. In a case where the content of the hydrocarbon surfactant is within the above range, the affinity between the first ink film and the second ink composition is improved, and the occurrence of cissing is suppressed.

Examples of the hydrocarbon surfactant include polyoxyethylene alkyl ethers, fatty acid sorbitan esters, alkyl polyglucosides, fatty acid diethanolamides, alkyl monoglyceryl ethers, an ethylene oxide adduct of acetylene diol, and a block polymer of ethylene oxide and propylene oxide.

The hydrocarbon surfactant may be a crosslinkable hydrocarbon surfactant having a crosslinkable group. Examples of the crosslinkable group include a polymerizable unsaturated group, an epoxy group, and an aziridinyl group. As the polymerizable group, especially, a polymerizable unsaturated group is preferable, and an ethylenically unsaturated group is particularly preferable.

Examples of commercially available crosslinkable hydrocarbon surfactants include BYK-UV3535 (manufactured by BYK CHEMIE JAPAN K.K.).

In the image recording method of the present disclosure, particularly in a case where the third ink film is formed on the second ink film, it is preferable that the first ink composition contain a surfactant having a crosslinkable group (crosslinkable surfactant). In a case where a surfactant has a crosslinkable group, because the surfactant itself is polymerized, the effusion (migration) of the surfactant is suppressed. In a case where the effusion of the surfactant contained in the first ink composition is suppressed, the surfactant is suppressed from being incorporated into the second ink composition applied onto the first ink film, which prevents the hexadecane-contacting angle on the second ink film from excessively increasing. As a result, in a case where the third ink composition is applied onto the second ink film, the occurrence of cissing is suppressed.

Examples of the crosslinkable surfactant include a crosslinkable fluorine surfactant, a crosslinkable silicone surfactant, and a crosslinkable hydrocarbon surfactant.

(Additive)

As long as the effects of the present disclosure are not impaired, if necessary, the ink composition can contain additives that are usually contained in an inkjet ink.

Examples of the additives include a crosslinking agent and a non-polymerizable polymer.

(Physical properties of ink composition)

In the present disclosure, the viscosity of the ink composition is not particularly limited. However, in a case where the ink composition is to be jetted by an inkjet recording method, from the viewpoint of jetting stability, the viscosity of the ink composition is preferably 30 mPa s or less, more preferably 0.5 mPa s to 20 mPa s, and even more preferably 3 mPa s to 15 mPa·s. The viscosity of the ink composition is measured using a rotary viscometer such as "VISCOMETER TV-22 (trade name)" manufactured by TOKI SANGYO CO., LTD. under the condition of 25°C.

In the present disclosure, the surface tension of the ink composition is not particularly limited. For example, the surface tension is preferably 25 mN/m or more, more preferably 25 mN/m to 60 mN/m, and even more preferably 25 mN/m to 45 mN/m. The surface tension of the ink composition can be adjusted, for example, by the type and content of the surfactant contained in the ink composition. The surface tension of the ink composition is measured by a plate method

using a surface tensiometer such as "fully automatic surface tensiometer CBVP-Z (trade name)" manufactured by Kyowa Interface Science Co., Ltd. under the condition of 25°C.

<First ink applying step>

The image recording method of the present disclosure includes a step of applying the first ink composition onto a substrate by an inkjet recording method (hereinafter, called "first ink applying step").

As the inkjet recording method, generally, known methods can be used. Examples thereof include an electric charge control method of jetting an ink composition by using electrostatic attraction force, a drop-on-demand method using the vibration pressure of a piezo element (pressure pulse method), an acoustic ink jet method of jetting an ink composition by using radiation pressure by means of converting electric signals into acoustic beams and irradiating the ink composition with the acoustic beams, and a thermal ink jet method of forming bubbles by heating an ink composition and using the generated pressure.

Generally, the image recording method using an ink jet recording device includes a shuttle scan method (also called "serial head method") of recording images by using a short serial head, and a single pass method (also called "line head method") of recording images by using a line head consisting of arrays of recording elements that cover the entire region of a recording medium in a width direction. In the shuttle scan method, images are recorded by the serial head that scans a recording medium in a width direction. On the other hand, in the single pass method, images can be recorded on the entire surface of a recording medium by a method of scanning the recording medium in a direction orthogonal to the arrangement direction of the recording elements. Therefore, unlike the shuttle scan method, the single pass method does not require a transport system such as a carriage that scans the serial head. Furthermore, in the single pass method, complicated scanning control for the movement of a carriage and the recording medium is not required, and only the recording medium moves. Therefore, the recording speed can be further increased compared to the shuttle scan method. The recording medium may be transported by a roll-to-roll method or a single sheet method.

From the viewpoint of suppressing the occurrence of cissing, the droplet volume of the first ink composition jetted from an inkjet head is preferably 2 pL (picoliters) to 80 pL, and more preferably 10 pL to 40 pL. The droplet volume means the volume of ink jetted from one nozzle at a time by an inkjet recording method.

The amount of the first ink composition applied may be appropriately adjusted, and is preferably 1 $g/m^2$ to 50 $g/m^2$ and more preferably 5 $g/m^2$ to 30 $g/m^2$.

The resolution of the first ink composition during jetting is preferably 100 dpi (dot per inch) × 100 dpi to 2,400 dpi × 2,400 dpi, and more preferably 200 dpi × 200 dpi to 1,200 dpi × 1,200 dpi. "dpi" means the number of dots per 25.4 mm.

In the first ink applying step, it is preferable to heat the substrate in the process of applying the first ink composition onto the substrate. Heating the substrate makes it possible to facilitate the fixing of the first ink composition to the substrate.

The heating unit is not particularly limited, and examples thereof include a heat drum, hot air, an infrared lamp, an oven, a heat plate, and a hot plate. The heating temperature is preferably 200°C or lower, more preferably 40°C to 100°C, and even more preferably 45°C to 80°C.

The first ink composition is any one of the two kinds of ink compositions that are prepared in the ink preparation step and contain a polymerizable liquid crystal compound, a chiral compound, a polymerization initiator, and an organic solvent.

The type of substrate is not particularly limited, and any substrate can be selected. The substrate may be any of an ink-absorbing substrate, a substrate having low ink absorbency, and a non-ink-absorbing substrate. Examples of the substrate include paper, leather, fabric, a plastic, a metal, and glass. Examples of the plastic include polyethylene terephthalate, polyvinyl chloride, polyvinylidene chloride, polyvinyl alcohol, polyvinyl acetate, polystyrene, an acrylonitrile-butadiene-styrene copolymer (ABS), polyethylene, polypropylene, polyisobutylene, polyamide, polyacetal, a methacrylic resin, an acrylic resin, polycarbonate, a fluororesin, cellulose acetate, chlorinated polyether, a phenolic resin, a urea resin, a melamine resin, a furan resin, a xylene resin, an epoxy resin, polyester, diallyl phthalate, methylpentene, ethylene vinyl acetate, polyurethane, a polyester elastomer, and polyimide. Examples of substrates suitable as the ink-absorbing substrate include a substrate with an image receiving layer such as pictorico proof. The image receiving layer can be formed by coating or printing, and the type of image receiving layer is not particularly limited. Furthermore, the substrate may be a substrate on which a color image has already been printed or a substrate provided with a deposition layer.

From the viewpoint of obtaining an image having excellent color reproducibility, as the substrate, a light-absorbing substrate is preferable. Specific examples of the substrate include a resin substrate containing a color pigment such as cyan, magenta, or yellow, and paper coated with a resin.

The light-absorbing substrate is preferably a substrate having a visible light absorbance of 50% or more in a light incidence direction of the substrate. A black substrate is preferably used because it excellently absorbs light and further improves the quality of the formed image. Furthermore, a lyophilization treatment or a rubbing treatment may be performed on the substrate. Especially, from the viewpoint of improving color developability, it is preferable to perform

a rubbing treatment on the substrate.

Examples of the black substrate include a resin substrate containing a black pigment, a substrate prepared by performing a blacking treatment such as an alumite treatment on a resin-coated paper substrate or a metal substrate, and the like. Furthermore, a molded article selected from any resin and metal may be used as a substrate. In a case where a molded article is used as a substrate, the substrate surface can be decorated by the image recording method of the present disclosure.

The visible light absorbance of a substrate can be measured by a spectrophotometer V570 (manufactured by JASCO Corporation). The visible light absorbance of 50% or more means that the light absorbance is 50% or more in the entire wavelength region of 380 nm to 780 nm.

On the substrate, for the purpose of enabling the substrate to more efficiently receive the first ink composition and imparting solvent resistance to a substrate in a case where the used substrate has low solvent resistance, for example, an underlayer may be formed which includes a cured substance of polyfunctional (meth) acrylate, an image layer containing a pigment, an image receiving layer receiving an ink solvent, an alignment film material, various polymer materials, various metal materials, and the like. A liquid crystal compound exhibits excellent aligning properties in a case where the substrate has high crystallinity and in a case where the substrate has high surface energy. Therefore, in a case where the used substrate is not suitable for aligning a liquid crystal compound, it is preferable to provide an underlayer. As the alignment film material, a known organic or inorganic material may be used. The underlayer may be a polymer layer with high crystallinity or a cured film layer formed of UV ink or the like.

The alignment film may be any of an organic alignment film or an inorganic alignment film. Examples of the alignment film include an organic polymer film such as polyvinyl alcohol and polyimide, and a thin metal film. Furthermore, the polymer constituting the alignment film is preferably a polymer having high crystallinity or a polymer having high surface energy. Examples of preferable polymers include polyvinyl alcohol, polymethyl methacrylate, polyethylene terephthalate, and soluble polyimide. Furthermore, the organic polymer film may be an ink layer formed of UV-curable inkjet ink. As the UV-curable inkjet ink, known inks can be used. The UV-curable inkjet ink may or may not contain a pigment.

The underlayer can be formed by applying a composition for forming an underlayer to the substrate. The method of applying the composition for forming an underlayer to the substrate is not particularly limited, and any method can be selected. Examples of the method of applying the composition for forming an underlayer to the substrate include inkjet recording, offset printing, gravure printing, flexographic printing, screen printing; a coating method using a bar coater, a die coater, a slit coater, or a spray, and a vapor deposition method. Before the composition for forming an underlayer is applied to the substrate, for the purpose of uniformly applying the composition for forming an underlayer to the substrate and improving the adhesiveness of the composition to the substrate, it is preferable to perform a lyophilization treatment on the substrate.

Examples of the method of forming the underlayer include a method of coating the substrate with a composition for forming an underlayer containing polyfunctional (meth)acrylate, a solvent, and a polymerization initiator and curing the composition by irradiation with an active energy ray. Furthermore, the underlayer may be one layer or a laminate of multiple layers. A lyophilization treatment may be performed on the underlayer. Furthermore, a rubbing treatment may be performed on the underlayer.

The underlayer may be an ink layer on which a color image is recorded. For example, on an ink layer on which a cyan image, a magenta image, a yellow image, a black image, a white image, or a metallic color image formed of an active energy ray-curable inkjet ink is recorded, an image can be directly recorded using the image recording method of the present disclosure. Particularly, in a case where the underlayer is an ink layer on which a black image having a high black density is recorded, the readability of the image recorded using the image recording method of the present disclosure is improved.

<First ink film forming step>

The image recording method of the present disclosure includes a step of forming a first ink film by irradiating the first ink composition applied onto the substrate with an active energy ray (hereinafter, also called "first ink film forming step").

The polymerizable liquid crystal compound contained in the first ink composition is polymerized and cured by irradiation with an active energy ray. By the curing, a first ink film is formed on the substrate. Examples of the active energy rays include ultraviolet rays, visible rays, and electron beams. Among these, ultraviolet rays (hereinafter, also called "UV") are preferable.

The peak wavelength of the ultraviolet rays is preferably 200 nm to 405 nm, more preferably 220 nm to 390 nm, and even more preferably 220 nm to 380 nm.

The exposure amount of ultraviolet rays is preferably 20 $mJ/cm^2$ to 5 $J/cm^2$, and more preferably 100 $mJ/cm^2$ to 1,500 $mJ/cm^2$. The irradiation time is preferably 0.01 seconds to 120 seconds, and more preferably 0.1 seconds to

90 seconds. As the irradiation conditions and the basic irradiation method, the irradiation conditions and the irradiation method disclosed in JP1985-132767A (JP-S60-132767A) can be adopted. Specifically, it is preferable to use a method of providing a light source on both sides of a head unit including an inkjet device and scanning the substrate by the head unit and the light source by a so-called shuttle method, or a method of irradiating the substrate with another light source that is not involved in driving.

As the light source for ultraviolet irradiation,a mercury lamp, a gas laser, and a solid-state laser are mainly used. A mercury lamp, a metal halide lamp, and an ultraviolet fluorescent lamp are widely known light sources. Furthermore, industrially and environmentally, using a gallium nitride (GaN)-based semiconductor ultraviolet light emitting device as a substitute is extremely useful. Being compact, highly efficient, and low cost and having a long life, UV-LED (light emitting diode)and UV-LD (laser diode) are promising light sources for ultraviolet irradiation. Among these, a metal halide lamp, a high-pressure mercury lamp, a medium-pressure mercury lamp, a low-pressure mercury lamp, or UV-LED is preferable as a light source for ultraviolet irradiation.

The thickness of the cured film of the first ink composition formed on the substrate is not particularly limited. For example, the thickness of the cured film is 0.5 $\mu$m to 20 $\mu$m.

In the first ink film forming step, after the first ink composition applied onto of the substrate is irradiated with an active energy ray, a lyophilization treatment may be performed on the cured film of the first ink composition.

In this step, by performing a lyophilization treatment on the cured film of the first ink composition, it is possible to obtain an image in which the occurrence of cissing is suppressed.

In the present disclosure, the lyophilization treatment is not particularly limited as long as the treatment can improve the affinity between the first ink film and the second ink composition. It is preferable that the lyophilization treatment reduce a hexadecane-contacting angle by at least 5°. That is, in this step, it is preferable that the lyophilization treatment be performed on the cured film of the first ink composition so that the hexadecane-contacting angle on the cured film of the first ink composition having undergone the lyophilization treatment is at least 5° smaller than the hexadecane-contacting angle on the cured film of the first ink composition not yet being subjected to the lyophilization treatment. Furthermore, the decrease of the hexadecane-contacting angle caused by the lyophilization treatment is more preferably at least 10°, and even more preferably at least 20°.

The lyophilization treatment is preferably at least one kind of treatment selected from the group consisting of a corona treatment, a plasma treatment, and an ultraviolet ozone treatment, and more preferably a corona treatment.

The corona treatment is preferably performed at a discharge amount of 50 W·min/$m^2$ or more. The discharge amount is more preferably 70 W·min/$m^2$ to 500 W·min/$m^2$, and even more preferably 80 W·min/$m^2$ to 350 W·min/$m^2$.

The discharge amount is calculated using the following equation.

$$\text{Discharge amount} = P(W)/\{L\ (m) \times v\ (m/min)\}$$

P (W): Discharge power
L (m): Length of discharge electrode
v (m/min): Processing speed

In the first ink film forming step, the first ink composition applied onto the substrate is irradiated with an active energy ray, thereby forming the first ink film. In a case where a lyophilization treatment is performed, after the first ink composition applied onto the substrate is irradiated with an active energy ray, the lyophilization treatment is performed so that the first ink film is formed. The first ink film has a hexadecane-contacting angle of 45° or less. In a case where the first ink film has a hexadecane-contacting angle of 45° or less, the affinity between the first ink film and the second ink composition is improved, and the occurrence of cissing is suppressed. From the viewpoint of suppressing the occurrence of cissing and suppressing bleeding, the first ink film has a hexadecane-contacting angle of preferably 3° to 40°, more preferably 3° to 25°, and even more preferably 10° to 25°.

<Second ink applying step>

The image recording method of the present disclosure includes a step of applying the second ink composition onto the first ink film having undergone the lyophilization treatment by an inkjet recording method (hereinafter, called "second ink applying step"). The method of applying the second ink composition by an inkjet recording method is the same as the method of applying the first ink composition by an inkjet recording method.

Between the 2 kinds of ink compositions that are prepared in the ink preparation step and contain a polymerizable liquid crystal compound, a chiral compound, a polymerization initiator, and an organic solvent, an ink composition different from the first ink composition is the second ink composition.

In the second ink applying step, in the process of applying the second ink composition, it is preferable to heat

the substrate on which the first ink film is formed. Heating the substrate on which the first ink film is formed makes it possible to facilitate the fixing of the second ink composition to the substrate on which the first ink film is formed.

The heating unit is not particularly limited, and examples thereof include a heat drum, hot air, an infrared lamp, an oven, a heat plate, and a hot plate. The heating temperature is preferably 200°C or lower, more preferably 40°C to 100°C, and even more preferably 45°C to 80°C.

<Second ink film forming step>

The image recording method of the present disclosure includes a step of forming a second ink film by irradiating the second ink composition applied onto the first ink film with an active energy ray (hereinafter, also called "second ink film forming step").

The polymerizable liquid crystal compound contained in the second ink composition is polymerized and cured by irradiation with an active energy ray. By the curing, the second ink film is formed on the first ink film. Examples of the active energy ray include an ultraviolet ray, a visible ray, and an electron beam. Among these, an ultraviolet ray is preferable. The method of irradiating the second ink composition with an active energy ray is the same as the method of irradiating the first ink composition with an active energy ray.

In the second ink film forming step, after the second ink composition applied onto the substrate is irradiated with an active energy ray, a lyophilization treatment may be performed on the cured film of the second ink composition.

In the second ink film forming step, the second ink composition applied onto the substrate is irradiated with an active energy ray so that a second ink film is formed. In a case where a lyophilization treatment is performed, after the second ink composition applied onto the substrate is irradiated with an active energy ray, the lyophilization treatment is performed so that the second ink film is formed.

<Other steps>

The image recording method of the present disclosure may include other steps in addition to the above steps.

It is preferable that the image recording method of the present disclosure include a first heating step of heating the first ink composition that follows the first ink applying step and precedes the step of irradiating the substrate with a first active energy ray. In addition, it is preferable that the image recording method of the present disclosure include a second heating step of heating the second ink composition that follows the second ink applying step and precedes a step of irradiating the substrate with a second active energy ray. Performing the heating steps make it possible to control the helical axes of the helical structures formed by the polymerizable liquid crystal compound so that the helical axes are in a uniform direction.

The heating unit is not particularly limited, and examples thereof include a heat drum, hot air, an infrared lamp, an oven, a heat plate, and a hot plate. The heating temperature is preferably 50°C to 200°C, more preferably 60°C to 150°C, and even more preferably 70°C to 120°C. The heating time is not particularly limited, and is 1 minute to 10 minutes for example.

It is preferable that the image recording method of the present disclosure further include a step of applying a third ink composition onto the second ink film by an inkjet recording method and a step of forming a third ink film by irradiating the third ink composition applied onto the second ink film with an active energy ray, in which the third ink composition is prepared in the ink preparation step and different from the first ink composition and the second ink composition. The third ink composition contains, for example, a third polymerizable liquid crystal compound, a third chiral compound, a third polymerization initiator, and a third organic solvent. The second ink film has a hexadecane-contacting angle of preferably 45° or less. In a case where the second ink film has a hexadecane-contacting angle of 45° or less, the affinity between the second ink film and the third ink composition is improved, and the occurrence of cissing is suppressed. From the viewpoint of suppressing the occurrence of cissing and suppressing bleeding, the second ink film has a hexadecane-contacting angle of preferably 3° to 40°, more preferably 3° to 25°, and even more preferably 10° to 25°.

In the image recording method of the present disclosure, the first ink composition may be directly applied onto the substrate. Alternatively, an underlayer such as an ink film may be formed on the substrate, and then the first ink composition may be applied onto the underlayer.

In the image recording method of the present disclosure, the step of applying an ink composition and the step of irradiating the substrate with an active energy ray may be repeated after the second ink film forming step. In a case where ink films are repeatedly formed, a lyophilization treatment may be appropriately performed on the cured film of each ink composition. Preferable aspects of the lyophilization treatment are as described above.

In the image recording method of the present disclosure, examples of the combination of the underlayer and the ink film formed on the substrate include a combination of the first ink film and the second ink film, a combination of the first ink film, the second ink film, and the third ink film, and a combination of an underlayer, the first ink film, the second ink film, and the third ink film.

(Use)

The image-recorded material obtained by the image recording method of the present disclosure may be used for decoration of various products, for example. Decoration may be directly performed on a product, or may be performed by preparing a decorative film and then sticking the decorative film to a product. It is also preferable to perform decoration by recording an image by the image recording method of the present disclosure on an image recorded by an inkjet recording method or the like. Examples of objects to be decorated include glass, various plastics, plastic films, metals, leather, paper, and fabric. Examples of the decoration include interior decoration; decoration of inner and outer walls of various containers, jewelry, a clock face, and various furniture; exterior decoration of indoor and outdoor signs such as signboards, banners, and placards; exterior decoration of various home appliances; exterior decoration of electronic watches, personal computers, mobile phones, and the like; decoration of display screens; and decoration of resin products for vehicles, solar panels, bags made of synthetic leather or the like, suitcases, polymer bills, cards such as ID cards and credit cards, gift cards, plastic bottles for cosmetics, glass bottles for alcoholic beverages, eyeglasses, paper substrates for packages laminated with plastic films, and plastic packaging materials.

Examples

Hereinafter, the present disclosure will be more specifically described based on examples, but the present disclosure is not limited to the following examples.

<Example 1>

[Preparation of ink composition]

(Ink Composition Gm1)

The following components were mixed together in a container kept at 25°C, thereby preparing an ink composition Gm1. The viscosity (25°C) of the ink composition Gm1 was 11 mPa's.

- ·Diethylene glycol diethyl ether···164.21 parts by mass
- ·Mixture A of polymerizable liquid crystal compounds···100.0 parts by mass
- ·Polymerization initiator: Bis(2,4,6-trimethylbenzoyl)phenylphosphine oxide (trade name "Omnirad 819, manufactured by IGM Resins B.V.")···4. 0 parts by mass
- ·Chiral compound A···5.23 parts by mass
- ·Fluorine surfactant (trade name "FTERGENT 208G" manufactured by NEOS COMPANY LIMITED)···0.07 parts by mass

The mixture A of polymerizable liquid crystal compounds consists of 33.4% by mass of a compound (10), 33.3% by mass of a compound (11), and 33.3% by mass of a compound (12) ($X^1$ = 2). The compounds (10) to (12) are rod-like liquid crystal compounds. The compound (10), the compound (11), the compound (12), and the chiral compound A have the following structures.

(Compound (10), Compound (11), and Compound (12))

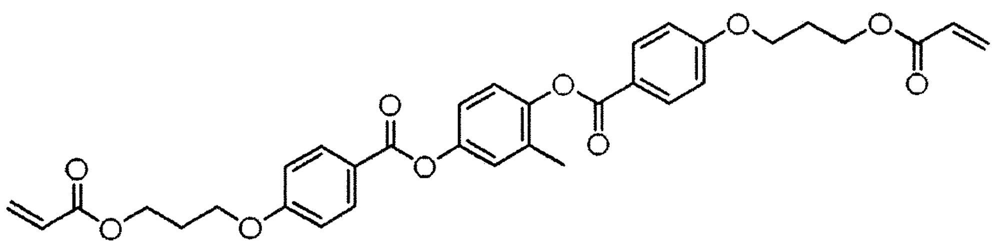

(10)

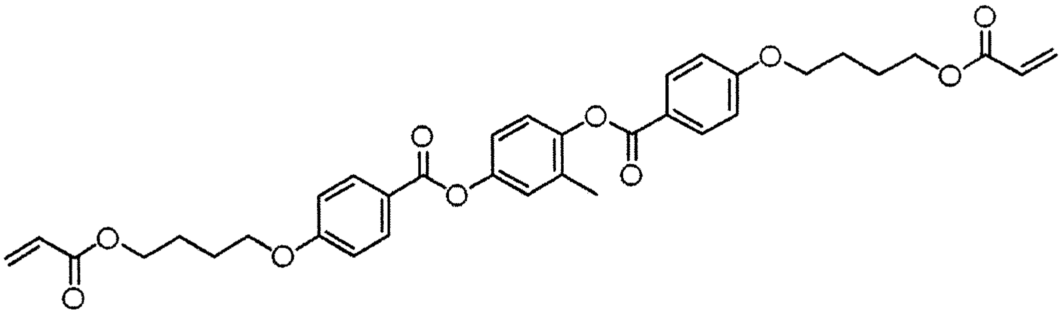

(11)

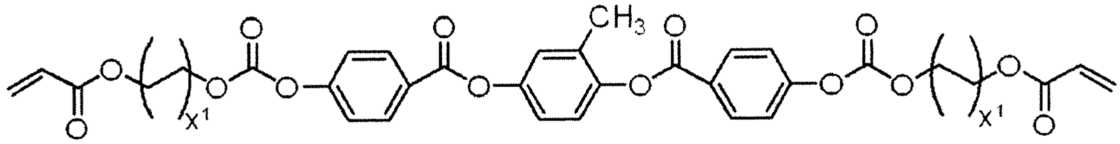

(12)

(Chiral compound A)

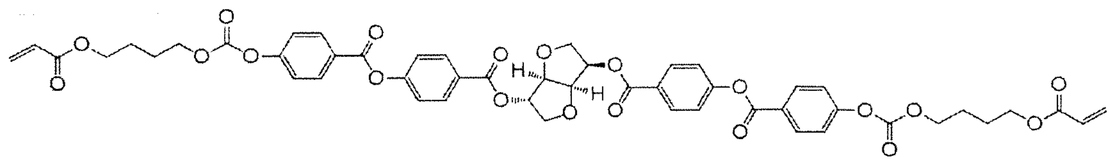

By using a spectral reflectometer (manufactured by Konica Minolta, Inc., trade name "FD-7"), the reflectivity of the ink film formed of the ink composition Gm1 in the visible range was measured. As a result, the ink composition Gm1 was found to be an ink forming an ink film having a selective reflection wavelength of 550 nm. Furthermore, polarization characteristics were measured using a left-handed circular polarizing plate. As a result, no reflection spectrum was obtained. That is, the ink composition Gm1 was an ink that forms right-handed polarized green ink film. Unless otherwise specified, other ink compositions were measured by the same method as the method used for measuring the ink composition Gm1.

(Preparation of ink composition Rm1)

An ink composition Rm1 was prepared by the same method as the method used for preparing the ink composition Gm1, except that the content of the chiral compound A in the ink composition Gm1 was changed to 4.78 parts by mass from 5.23 parts by mass, and the content of diethylene glycol diethyl ether was changed to 163.06 parts by mass from 164.21 parts by mass. The viscosity (25°C) of the ink composition Rm1 was 11 mPa s. The ink composition Rm1 was an ink forming a right-handed polarized red ink film reflecting right-handed circularly polarized light having a selective reflection wavelength of 650 nm.

(Preparation of ink composition Bm1)

An ink composition Bm1 was prepared by the same method as the method used for preparing the ink composition Gm1, except that the content of the chiral compound A in the ink composition Gm1 was changed to 6.30 parts by mass from 5.23 parts by mass, and the content of diethylene glycol diethyl ether was changed to 165.88 parts by mass from 164.21 parts by mass. The viscosity (25°C) of the ink composition Bm1 was 11 mPa s. The ink composition Bm1 was an ink forming a right-handed polarized blue ink film reflecting right-handed circularly polarized light having a selective reflection wavelength of 450 nm.

[Recording ink image]

An ink image was recorded with an inkjet printer (trade name "UJF3042HG", manufactured by MIMAKI ENGINEERING CO., LTD) by using a PET sheet (trade name "VIEWFUL UV TP-188", manufactured by KIMOTO) as a substrate and the ink composition Bm1. A solid image was recorded at an image resolution of 720 dpi × 600 dpi. During the image recording, a hot plate was installed on a platen. The temperature of the hot plate was set to 50°C. After the image recording was finished, the substrate on which the solid image was formed was stored for 5 minutes in an oven set to 80°C, and irradiated with ultraviolet rays from a metal halide light source at 500 mJ/$cm^2$. As a result, a cured film of the ink composition Bm1 was formed.

By using a corona treatment machine (trade name "Corona Oscillator TEC4AX", manufactured by KASUGA DENKI, INC.), a corona treatment was performed once on the cured film of the ink composition Bm1 under the conditions of power of 100 W and 4 m/min, thereby forming a first ink film. After the corona treatment, image recording, a heat treatment, and ultraviolet irradiation were performed using the ink composition Gm1 in the same manner as in the formation of the first ink film. During the image recording, a solid image was recorded on the first ink film. In this way, a second ink film as a cured film of the ink composition Gm1 was formed on the first ink film.

<Example 2>

Image samples were obtained in the same manner as in Example 1, except that the conditions for the corona treatment in Example 1 were changed to the following conditions.

In Example 2, by using a corona treatment machine (trade name "Corona Oscillator TEC4AX", manufactured by KASUGA DENKI, INC.), a corona treatment was performed once on the cured film of the ink composition Bm1 under the conditions of power of 60 W and 4 m/min.

<Comparative Example 1>

In Comparative Example 1, image samples were obtained in the same manner as in Example 1, except that the first ink film as a cured film of the ink composition Bm1 was obtained without performing a corona treatment on the cured film of the ink composition Bm1.

[Evaluation]

(Cissing)

By using the aforementioned image samples, a degree of cissing was visually observed. The evaluation standard is as follows. A and B are levels at which no problem arises in practical use.

A: Cissing was not observed at all.
B: Cissing was observed in some part of a sample.
C: Cissing was observed in the entire sample.

Table 1 shows the evaluation results. In addition, Table 1 shows the conditions (discharge amount) of the corona treatment in Examples 1 and 2. Because a corona treatment was not performed in Comparative Example 1, "-" was marked in the column of Discharge amount. Table 1 also shows the hexadecane-contacting angle on the first ink film.

The discharge amount was calculated by the following equation. The length of a discharge electrode in the corona treatment machine used in examples was 0.23 m. The hexadecane-contacting angle was measured at 2 sites by using a contact angle meter (trade name "Drop master 500", manufactured by Kyowa Interface Science Co., Ltd.), and the average thereof was calculated.

$$\text{Discharge amount} = P(W)/\{L\ (m) \times v\ (m/min)\}$$

P (W): Discharge power
L (m): Length of discharge electrode
v (m/min): Processing speed

[Table 1]

| | Discharge amount [W·min/$m^2$] | Contact angle [°] | Cissing |
|---|---|---|---|
| Example 1 | 109 | 15.4 | A |

(continued)

| | Discharge amount [W·min/$m^2$] | Contact angle [°] | Cissing |
|---|---|---|---|
| Example 2 | 65 | 27.3 | B |
| Comparative Example 1 | - | 46.9 | C |

As shown in Table 1, in Examples 1 and 2, the image recording method includes a step of preparing at least two ink compositions including a first ink composition that contains a polymerizable liquid crystal compound, a chiral compound, a polymerization initiator, and an organic solvent and a second ink composition that contains a polymerizable liquid crystal compound, a chiral compound, a polymerization initiator, and an organic solvent, a step of applying the first ink composition onto a substrate by an inkjet recording method, a step of forming a first ink film by irradiating the first ink composition applied onto the substrate with an active energy ray, a step of applying the second ink composition onto the first ink film by an inkjet recording method, and a step of forming a second ink film by irradiating the second ink composition applied onto the first ink film with an active energy ray, the first ink film has a hexadecane-contacting angle of 45° or less, and an image in which the occurrence of cissing is suppressed can be obtained.

Particularly, it has been confirmed that in Example 1, because a corona treatment at a discharge amount of 70 W·min/$m^2$ or more is performed on the cured film of the first ink composition in Example 1, an image in which the occurrence of cissing is further suppressed can be obtained.

In addition, a corona treatment was performed on the second ink film obtained in Example 1 under the same conditions as in Example 1, and image recording, a heat treatment, and ultraviolet irradiation were performed using the ink composition Rm1 after the corona treatment so that the third ink film derived from the ink composition Rm1 was formed on the second ink film. As a result, an image in which the occurrence of cissing is suppressed could be obtained.

On the other hand, in Comparative Example 1, because the hexadecane-contacting angle on the first ink film was more than 45°, the occurrence of cissing was confirmed.

<Example 101>

[Preparation of ink composition]

(Ink Composition Gm101)

The following components were mixed together in a container kept at 25°C, thereby preparing an ink composition Gm101. The viscosity (25°C) of the ink composition Gm101 was 11 mPa s.

·Diethylene glycol diethyl ether···61.975 parts by mass
·Mixture B of polymerizable liquid crystal compounds···34% by mass
·Polymerization initiator: Bis(2,4,6-trimethylbenzoyl)phenylphosphine oxide (trade name "Omnirad 819", manufactured by IGM Resins B.V.)···2.0 parts by mass
·Chiral compound A···2.0% by mass
·Fluorine surfactant (trade name "FTERGENT 208G" manufactured by NEOS COMPANY LIMITED)···0.025% by mass

The mixture B of polymerizable liquid crystal compounds consists of 50% by mass of the compound (10) and 50% by mass of the compound (12).

By using a spectral reflectometer (manufactured by Konica Minolta, Inc., trade name "FD-7"), the reflectivity of the ink film formed of the ink composition Gm101 in the visible range was measured. As a result, the ink composition Gm101 was found to be an ink forming an ink film having a selective reflection wavelength of 500 nm. Furthermore, polarization characteristics were measured using a left-handed circular polarizing plate. As a result, no reflection spectrum was obtained. That is, the ink composition Gm101 was an ink that forms right-handed polarized green ink film. Unless otherwise specified, other ink compositions were measured by the same method as the method used for measuring the ink composition Gm101.

(Preparation of ink composition Rm101)

An ink composition Rm101 was prepared by the same method as the method used for preparing the ink composition Gm101, except that the content of the chiral compound A in the ink composition Gm101 was changed to

1.5% by mass from 2.0% by mass, and the content of the mixture B of polymerizable liquid crystal compounds was changed to 34.5% by mass from 34% by mass. The viscosity (25°C) of the ink composition Rm101 was 11 mPa s. The ink composition Rm101 was an ink forming a right-handed polarized red ink film reflecting right-handed circularly polarized light having a selective reflection wavelength of 620 nm.

(Preparation of ink composition Bm101)

An ink composition Bm101 was prepared by the same method as the method used for preparing the ink composition Gm101, except that the content of the chiral compound A in the ink composition Gm101 was changed to 2.2% by mass from 2.0% by mass, and the content of the mixture B of polymerizable liquid crystal compounds was changed to 33.8% by mass from 34% by mass. The viscosity (25°C) of the ink composition Bm101 was 11 mPa·s. The ink composition Bm101 was an ink forming a right-handed polarized blue ink film reflecting right-handed circularly polarized light having a selective reflection wavelength of 445 nm.

[Recording ink image]

A cured film of the ink composition Bm101 was formed on a substrate by performing image recording, a heat treatment, and ultraviolet irradiation in the same manner in Example 1, except that the ink composition Bm101 was used as a first ink composition. A corona treatment was performed on the cured film of the ink composition Bm101 by the same method as in Example 1, thereby obtaining a first ink film. During the image recording, a solid image was recorded.

A cured film of the ink composition Gm101 was formed on the first ink film by performing image recording, a heat treatment, and ultraviolet irradiation in the same manner as in Example 1, except that the ink composition Gm101 was used as a second ink composition. A corona treatment was performed on the cured film of the ink composition Gm101 under the same conditions of the corona treatment performed on the cured film of the ink composition Bm101, thereby obtaining a second ink film. During the image recording, a solid image and a line-and-space image having a width of 0.5 points (pt) were recorded.

A third ink film as a cured film of the ink composition Rm101 was formed on the second ink film by performing image recording, a heat treatment, and ultraviolet irradiation by the same method as in Example 1 by using the ink composition Rm101 as a third ink composition. During the image recording, a solid image and a line-and-space image having a width of 0.5 points (pt) were recorded.

In a case where an underlayer formed of a composition for forming an underlayer (trade name "LH-100 CLEAR", manufactured by MIMAKI ENGINEERING CO., LTD) was provided on the substrate before the applying of the first ink composition, a first ink film, a second ink film, and a third ink film were also formed as in Example 101.

<Examples 102 to 105>

A first ink film, a second ink film, and a third ink film were formed in the same manner as in Example 101, except that the conditions of the corona treatment in Example 101 were changed to the following conditions.

In Example 102, by using a corona treatment machine (trade name "Corona Oscillator TEC4AX", manufactured by KASUGA DENKI, INC.), a corona treatment was performed once on the cured film of the first ink composition and the cured film of the second ink composition under the conditions of power of 60 W and 4 m/min.

In Example 103, by using a corona treatment machine (trade name "Corona Oscillator TEC4AX", manufactured by KASUGA DENKI, INC.), a corona treatment was performed once on the cured film of the first ink composition and the cured film of the second ink composition under the conditions of power of 40 W and 4 m/min.

In Example 104, by using a corona treatment machine (trade name "Corona Oscillator TEC4AX", manufactured by KASUGA DENKI, INC.), a corona treatment was performed three times on the cured film of the first ink composition and the cured film of the second ink composition under the conditions of power of 100 W and 4 m/min.

In Example 105, by using a corona treatment machine (trade name "Corona Oscillator TEC4AX", manufactured by KASUGA DENKI, INC.), a corona treatment was performed five times on the cured film of the first ink composition and the cured film of the second ink composition under the conditions of power of 100 W and 4 m/min.

<Example 106>

A first ink film, a second ink film, and a third ink film were formed in the same manner as in Example 101, except that the content of the surfactant contained in the first ink composition, the second ink composition, and the third ink composition was changed to the content shown in Table 2, a corona treatment was not performed after the first ink composition was irradiated with an active energy ray, and a corona treatment was not performed after the second ink composition was irradiated with an active energy ray. In Example 106, the content of a surfactant was further increased

than in Example 101, which leaded to the decrease in the content of the mixture B of polymerizable liquid crystal compounds. In the following examples, the content of a surfactant was adjusted by adjusting the content of the mixture B of the polymerizable liquid crystal compounds.

<Examples 107 to 115 and Comparative Examples 102 and 103>

A first ink film, a second ink film, and a third ink film were formed in the same manner as in Example 106, except that the type and content of surfactant contained in the first ink composition were changed to the type and content described in Table 2.

The surfactants used in Examples 107 to 115 and Comparative Examples 102 and 103 are as follows.

Hydrocarbon surfactant: trade name "BYK-399", manufactured by BYK CHEMIE JAPAN K.K.

Crosslinkable hydrocarbon surfactant: trade name "BYK-UV3535", manufactured by BYK CHEMIE JAPAN K.K.)

Crosslinkable silicone surfactant: trade name "BYK-UV3505", manufactured by BYK CHEMIE JAPAN K.K.)

<Example 116>

A first ink film, a second ink film, and a third ink film were formed in the same manner as in Example 106, except that a surfactant was not incorporated into the first ink composition.

<Comparative Example 101>

A first ink film, a second ink film, and a third ink film were formed in the same manner as in Example 101, except that in Comparative Example 101, a corona treatment was not performed after the first ink composition was irradiated with an active energy ray, and a corona treatment was not performed after the second ink composition was irradiated with an active energy ray.

[Evaluation]

Regarding cissing and bleeding, two-layer evaluation and three-layer evaluation were performed. The two-layer evaluation was performed using an image sample in which a cured film of the second ink composition was formed on the first ink film. The two-layer evaluation for cissing was performed using an image sample in which both the first and second layers are solid images. The two-layer evaluation for bleeding was performed using an image sample in which the first layer was a solid image and the second layer was a line-and-space image. The three-layer evaluation was performed using an image sample in which the first ink film, the second ink film, and the third ink film were formed in this order. The three-layer evaluation for cissing was performed using an image sample in which all of the first, second, and third layers are solid images. The three-layer evaluation for bleeding was performed using an image sample in which the first and second layers were solid images and the third layer was a line-and-space image.

(Cissing)

By using the aforementioned image samples, a degree of cissing was visually observed. The evaluation standard is as follows. A to C are levels at which no problem arises in practical use.

A: Cissing is not observed at all, or the area where cissing is observed is not more than 1% of the entire solid image.
B: The area where cissing is observed is more than 1% but not more than 5% of the entire solid image.
C: The area where cissing is observed is more than 5% but not more than 40% of the entire solid image.
D: The area where cissing is observed is more than 40% of the entire solid image.

(Bleeding)

By using the aforementioned image samples, a degree of cissing was visually observed. The evaluation standard is as follows. A to C are levels at which no problem arises in practical use.

A: Wetting or crushing is not observed at all in the 0.5 pt space portion, or the area where wetting or crushing of the 0.5 pt space portion is observed is not more than 1% of the entire line-and-space image.
B: The area where wetting or crushing of the 0.5 pt space portion is observed is more than 1% but not more than 5% of the entire line-and-space image.
C: The area where wetting or crushing of the 0.5 pt space portion is observed is more than 5% but not more than

40% of the entire line-and-space image.

D: The area where wetting or crushing of the 0.5 pt space portion is observed is more than 40% of the entire line-and-space image.

Table 2 shows the evaluation results. Table 2 also shows the conditions (discharge amount) of the corona treatment in Examples 101 to 105. Because a corona treatment was not performed in Examples 106 to 116 and Comparative Examples 101 to 103, "-" was marked in the column of Discharge amount. In addition, Table 2 shows the hexadecane-contacting angle on the first and second ink films. The discharge amount and the hexadecane-contacting angle were measured by the same method as in Example 1.

[Table 2]

| | First ink film | | | | Second ink film | | | | Third ink film | | Evaluation result | | | |
|---|---|---|---|---|---|---|---|---|---|---|---|---|---|---|
| | Surfactant in first ink composition | | Discharge amount [W·min/m$^2$] | Contact angle [°] | Surfactant in second ink composition | | Discharge amount [W·min/m$^2$] | Contact angle [°] | Surfactant in third ink composition | | Two-layer evaluation | | Three-layer evaluation | |
| | Type | Content (% by mass) | | | Type | Content (% by mass) | | | Type | Content (% by mass) | Cissing | bleeding | Cissing | bleeding |
| Example 101 | Fluorine surfactant | 0.025 | 109 | 15.4 | Fluorine surfactant | 0.025 | 109 | 16.0 | Fluorine surfactant | 0.025 | A | A | A | A |
| Example 102 | Fluorine surfactant | 0.025 | 65 | 27.3 | Fluorine surfactant | 0.025 | 65 | 28.0 | Fluorine surfactant | 0.025 | B | A | B | A |
| Example 103 | Fluorine surfactant | 0.025 | 43 | 35.4 | Fluorine surfactant | 0.025 | 43 | 36.0 | Fluorine surfactant | 0.025 | B | A | B | A |
| Example 104 | Fluorine surfactant | 0.025 | 326 | 12.5 | Fluorine surfactant | 0.025 | 326 | 12.0 | Fluorine surfactant | 0.025 | A | A | A | A |
| Example 105 | Fluorine surfactant | 0.025 | 543 | 6.4 | Fluorine surfactant | 0.025 | 543 | 60 | Fluorine surfactant | 0.025 | A | B | A | B |
| Example 106 | Fluorine surfactant | 0.01 | - | 30.9 | Fluorine surfactant | 0.01 | - | 42.3 | Fluorine surfactant | 0.01 | B | A | C | A |
| Example 107 | Fluorine surfactant | 0.005 | - | 16.5 | Fluorine surfactant | 0.01 | - | 41.0 | Fluorine surfactant | 0.01 | A | A | C | A |
| Example 108 | Crosslinkable hydrocarbon surfactant | 0.005 | - | 3.9 | Fluorine surfactant | 0.01 | - | 38.3 | Fluorine surfactant | 0.01 | A | B | B | A |
| Example 109 | Crosslinkable hydrocarbon surfactant | 0.015 | - | 11.0 | Fluorine surfactant | 0.01 | - | 36.9 | Fluorine surfactant | 0.01 | A | A | B | A |
| Example 110 | Fluorine surfactant | 0.02 | - | 39.0 | Fluorine surfactant | 0.01 | - | 44.8 | Fluorine surfactant | 0.01 | B | A | C | A |
| Example 111 | Ilydrocarbon surfactant | 0.015 | - | 11.0 | Fluorine surfactant | 0.01 | - | 41.0 | Fluorine surfactant | 0.01 | A | A | C | A |

(continued)

| | First ink film | | | | Second ink film | | | | Third ink film | | Evaluation result | | | |
|---|---|---|---|---|---|---|---|---|---|---|---|---|---|---|
| | Surfactant in first ink composition | | Discharge amount [W·min/m$^2$] | Contact angle [°] | Surfactant in second ink composition | | Discharge amount [W·min/m$^2$] | Contact angle [°] | Surfactant in third ink composition | | Two-layer evaluation | | Three-layer evaluation | |
| | Type | Content (% by mass) | | | Type | Content (% by mass) | | | Type | Content (% by mass) | Cissing | bleeding | Cissing | bleeding |
| Example 112 | Crosslinkable hydrocarbon surfactant | 0.3 | - | 44.5 | Fluorine surfactant | 0.01 | - | 37.5 | Fluorine surfactant | 0.01 | C | A | B | A |
| Example 113 | Crosslinkable silicone surfactant | 0.005 | - | 6.0 | Fluorine surfactant | 0.01 | - | 37.5 | Fluorine surfactant | 0.01 | A | B | B | A |
| Example 114 | Crosslinkable silicone surfactant | 0.015 | - | 13.0 | Fluorine surfactant | 0.01 | - | 37.5 | Fluorine surfactant | 0.01 | A | A | B | A |
| Example 115 | Crosslinkable silicone surfactant | 0.3 | - | 44.7 | Fluorine surfactant | 0.01 | - | 37.5 | Fluorine surfactant | 0.01 | C | A | B | A |
| Example 116 | - | - | - | 2.0 | Fluorine surfactant | 0.01 | - | 36.4 | Fluorine surfactant | 0.01 | A | C | B | A |
| Comparative Example 101 | Fluorine surfactant | 0.025 | - | 46.9 | Fluorine surfactant | 0.025 | - | 55.0 | Fluorine surfactant | 0.025 | D | A | D | A |
| Comparative Example 102 | Crosslinkable hydrocarbon surfactant | 0.4 | - | 46.0 | Fluorine surfactant | 0.025 | - | 47.0 | Fluorine surfactant | 0.025 | D | A | D | A |
| Comparative Example 103 | Crosslinkable silicone surfactant | 0.4 | - | 46.0 | Fluorine surfactant | 0.025 | - | 47.0 | Fluorine surfactant | 0.025 | D | A | D | A |

As shown in Table 2, in Examples 101 to 116, the image recording method includes a step of preparing at least two ink compositions including a first ink composition that contains a polymerizable liquid crystal compound, a chiral compound, a polymerization initiator, and an organic solvent and a second ink composition that contains a polymerizable liquid crystal compound, a chiral compound, a polymerization initiator, and an organic solvent, a step of applying the first ink composition onto a substrate by an inkjet recording method, a step of forming a first ink film by irradiating the first ink composition applied onto the substrate with an active energy ray, a step of applying the second ink composition onto the first ink film by an inkjet recording method, and a step of forming a second ink film by irradiating the second ink composition applied onto the first ink film with an active energy ray, the first ink film has a hexadecane-contacting angle of 45° or less, and an image in which the occurrence of cissing is suppressed can be obtained from both the two-layer sample and three-layer sample.

On the other hand, in Comparative Examples 101 to 103, because the hexadecane-contacting angle on the first ink film was more than 45°, the occurrence of cissing was observed in both the two-layer sample and three-layer sample.

It has been confirmed that in Example 109, the hexadecane-contacting angle on the first ink film was 3° or more, and the bleeding in the two layers was further suppressed compared to Example 116.

It has been confirmed that in Example 109, the hexadecane-contacting angle on the first ink film was 25° or less, and the cissing in the two layers was further suppressed compared to Example 112.

It has been confirmed that in Example 101, because a corona treatment at a discharge amount of 70 W·min/$m^2$ or more was performed on the cured film of the first ink composition, the occurrence of cissing in two layers was further suppressed compared to Examples 102 and 103. Likewise, it has been confirmed that in Example 101, because a corona treatment at a discharge amount of 70 W·min/$m^2$ or more was performed on the cured film of the second ink composition, the occurrence of cissing in three layers was further suppressed compared to Examples 102 and 103.

It has been confirmed that in Example 101, because a corona treatment at a discharge amount of 500 W·min/$m^2$ or less was performed on the cured film of the first ink composition, the occurrence of bleeding in two layers was further suppressed compared to Example 105. Likewise, it has been confirmed that in Example 101, because a corona treatment at a discharge amount of 500 W·min/$m^2$ or less was performed on the cured film of the second ink composition, the occurrence of bleeding in three layers was further suppressed compared to Example 105.

It has been confirmed that in Example 109, because the first ink composition contains a crosslinkable surfactant, the occurrence of cissing in three layers is further suppressed compared to Example 111.

<Examples 201 to 216>

[Preparation of ink composition]

(Ink Composition Gm201)

The following components were mixed together in a container kept at 25°C, thereby preparing an ink composition Gm201.

- ·Diethylene glycol diethyl ether···61.025% by mass
- ·Mixture A of polymerizable liquid crystal compounds···35.658% by mass
- ·Polymerization initiator: Bis(2,4,6-trimethylbenzoyl)phenylphosphine oxide (trade name "Omnirad 819, manufactured by IGM Resins B.V.")···1.426% by mass
- ·Chiral compound A···1.866% by mass
- ·Fluorine surfactant (trade name "FTERGENT 208G" manufactured by NEOS COMPANY LIMITED)···0.025% by mass

The viscosity (25°C) of the ink composition Gm201 was 11 mPa·s. The ink composition Gm201 was an ink forming a right-handed polarized green ink film reflecting right-handed circularly polarized light having a selective reflection wavelength of 530 nm.

(Preparation of ink composition Rm201)

An ink composition Rm201 was prepared by the same method as the method used for preparing the ink composition Gm201, except that the content of the chiral compound A in the ink composition Gm201 was changed to 1.614% by mass from 1.866% by mass, the content of the mixture of polymerizable liquid crystal compounds was changed to 35.900% by mass from 35.658% by mass, and the content of the polymerization initiator was changed to 1.436% by mass from 1.426% by mass. The viscosity (25°C) of the ink composition Rm201 was 11 mPa s. The ink

composition Rm201 was an ink forming a right-handed polarized red ink film reflecting right-handed circularly polarized light having a selective reflection wavelength of 610 nm.

(Preparation of ink composition Bm201)

An ink composition Bm201 was prepared by the same method as the method used for preparing the ink composition Gm201, except that the content of the chiral compound A in the ink composition Gm201 was changed to 2.225% by mass from 1.866% by mass, the content of the mixture of polymerizable liquid crystal compounds was changed to 35.312% by mass from 35.658% by mass, and the content of the polymerization initiator was changed to 1.413% by mass from 1.426% by mass. The viscosity (25°C) of the ink composition Bm201 was 11 mPa s. The ink composition Bm201 was an ink forming a right-handed polarized blue ink film reflecting right-handed circularly polarized light having a selective reflection wavelength of 450 nm.

In Example 201, image recording and evaluation were performed under the same conditions as in Example 101 by using the ink compositions Gm201, Rm201, and Bm201 instead of the ink compositions Gm101, Rm101, and Bm101. In Examples 202 to 216, the conditions of the corona treatment and the type and amount of surfactants were changed for Example 201 as in Examples 102 to 116. As a result, it has been confirmed that the same results as those in Examples 101 to 116 are obtained in Examples 201 to 216.

## Claims

**1.** An image recording method, comprising:

a step of preparing at least two ink compositions including a first ink composition that comprises a polymerizable liquid crystal compound, a chiral compound, a polymerization initiator, and an organic solvent and a second ink composition that comprises a polymerizable liquid crystal compound, a chiral compound, a polymerization initiator, and an organic solvent;
a step of applying the first ink composition onto a substrate by an inkjet recording method;
a step of forming a first ink film by irradiating the first ink composition applied onto the substrate with an active energy ray;
a step of applying the second ink composition onto the first ink film by an inkjet recording method; and
a step of forming a second ink film by irradiating the second ink composition applied onto the first ink film with an active energy ray,
wherein the first ink film has a hexadecane-contacting angle of 45° or less.

**2.** The image recording method according to claim 1, wherein a third ink composition that comprises s a polymerizable liquid crystal compound, a chiral compound, a polymerization initiator, and an organic solvent is further prepared in the step of preparing at least two ink compositions, and the image recording method further comprises:

a step of applying the third ink composition onto the second ink film by an inkjet recording method; and
a step forming a third ink film by irradiating the third ink composition applied onto the second ink film with an active energy ray,
wherein the second ink film has a hexadecane-contacting angle of 45° or less.

**3.** The image recording method according to claim 1 or 2,
wherein the first ink film has a hexadecane-contacting angle of 3° to 25°.

**4.** The image recording method according to any one of claims 1 to 3,
wherein the step of forming a first ink film is a step of forming a first ink film by irradiating the first ink composition applied onto the substrate with an active energy ray and then performing a lyophilization treatment on a cured film of the first ink composition.

**5.** The image recording method according to claim 4,
wherein the lyophilization treatment is at least one kind of treatment selected from the group consisting of a corona treatment, a plasma treatment, and an ultraviolet ozone treatment.

**6.** The image recording method according to claim 5,
wherein the corona treatment is performed at a discharge amount of 70 W·min/$m^2$ to 500 W·min/$m^2$.

**7.** The image recording method according to any one of claims 1 to 6,

wherein the first ink composition further comprises a fluorine surfactant, and
a content of the fluorine surfactant is 0.005% by mass to 0.02% by mass with respect to a total amount of the first ink composition.

**8.** The image recording method according to any one of claims 1 to 6,

wherein the first ink composition further comprises a silicone surfactant, and
a content of the silicone surfactant is 0.005% by mass to 0.3% by mass with respect to a total amount of the first ink composition.

**9.** The image recording method according to any one of claims 1 to 6,

wherein the first ink composition further comprises a hydrocarbon surfactant, and
a content of the hydrocarbon surfactant is 0.005% by mass to 0.3% by mass with respect to a total amount of the first ink composition.

**10.** The image recording method according to any one of claims 1 to 6,

wherein the first ink composition further comprises a surfactant, and
the surfactant is a surfactant having a crosslinkable group.

**11.** The image recording method according to any one of claims 1 to 10,
wherein a content of the chiral compound in the first ink composition differs from a content of the chiral compound in the second ink composition..

**12.** The image recording method according to any one of claims 1 to 11,
wherein each of the first ink composition and the second ink composition comprises two or more kinds of polymerizable liquid crystal compounds.

**13.** The image recording method according to any one of claims 1 to 12,
wherein the substrate is a light-absorbing substrate.

**14.** The image recording method according to claim 13,
wherein a visible light absorbance of the substrate is 50% or more.

**15.** The image recording method according to any one of claims 1 to 14,

wherein a content of an organic solvent having a boiling point of 80°C to 300°C in the first ink composition is 30% by mass or more with respect to a total amount of the organic solvent in the first ink composition, and
a content of an organic solvent having a boiling point of 80°C to 300°C in the second ink composition is 30% by mass or more with respect to a total amount of the organic solvent in the second ink composition.

**Patentansprüche**

**1.** Bildaufzeichnungsverfahren, umfassend:

einen Schritt des Herstellens von mindestens zwei Tintenzusammensetzungen umfassend eine erste Tintenzusammensetzung, die eine polymerisierbare Flüssigkristallverbindung, eine chirale Verbindung, einen Polymerisationsinitiator und ein organisches Lösungsmittel umfasst, und eine zweite Tintenzusammensetzung, die eine polymerisierbare Flüssigkristallverbindung, eine chirale Verbindung, einen Polymerisationsinitiator und ein organisches Lösungsmittel umfasst;
einen Schritt des Aufbringens der ersten Tintenzusammensetzung auf ein Substrat durch ein Tintenstrahlaufzeichnungsverfahren;
einen Schritt des Bildens eines ersten Tintenfilms durch Belichten der auf das Substrat aufgebrachten ersten Tintenzusammensetzung mit einem aktiven Energiestrahl;

einen Schritt des Aufbringens der zweiten Tintenzusammensetzung auf den ersten Tintenfilm durch ein Tintenstrahlaufzeichnungsverfahren; und
einen Schritt des Bildens eines zweiten Tintenfilms durch Belichten der auf den ersten Tintenfilm aufgebrachten zweiten Tintenzusammensetzung mit einem aktiven Energiestrahl,
wobei der erste Tintenfilm einen Hexadekan-Kontaktwinkel von 45° oder weniger aufweist.

**2.** Bildaufzeichnungsverfahren nach Anspruch 1, wobei ferner in dem Schritt des Herstellens der mindestens zwei Tintenzusammensetzungen eine dritte Tintenzusammensetzung hergestellt wird, die eine polymerisierbare Flüssigkristallverbindung, eine chirale Verbindung, einen Polymerisationsinitiator und ein organisches Lösungsmittel umfasst, und das Bildaufzeichnungsverfahren ferner umfasst:

einen Schritt des Aufbringens der dritten Tintenzusammensetzung auf den zweiten Tintenfilm durch ein Tintenstrahlaufzeichnungsverfahren; und
einen Schritt des Bildens eines dritten Tintenfilms durch Belichten der auf den zweiten Tintenfilm aufgebrachten dritten Tintenzusammensetzung mit einem aktiven Energie strahl,
wobei der zweite einen Hexadekan-Kontaktwinkel von 45° oder weniger aufweist.

**3.** Bildaufzeichnungsverfahren nach Anspruch 1 oder 2, wobei der erste Tintenfilm einen Hexadekan-Kontaktwinkel von 3° bis 25° aufweist.

**4.** Bildaufzeichnungsverfahren nach einem der Ansprüche 1 bis 3, wobei der Schritt des Bildens des ersten Tintenfilms ein Schritt des Bildens eines ersten Tintenfilms durch Belichten der auf das Substrat aufgebachten ersten Tintenzusammensetzung mit einem aktiven Energiestrahl und dann Ausführen einer Gefriertrocknungsbehandlung auf einem gehärteten Film der ersten Tintenzusammensetzung ist.

**5.** Bildaufzeichnungsverfahren nach Anspruch 4, wobei die
Gefriertrocknungsbehandlung mindestens eine Art der Behandlung, ausgewählt aus der Gruppe bestehend aus einer Coronabehandlung, eine Plasmabehandlung und einer Ultraviolettozonbehandlung ist.

**6.** Bildaufzeichnungsverfahren nach Anspruch 5, wobei die Coronabehandlung mit einer Ausstoßmenge von 70 $W{\cdot}min/m^2$ bis 500 $W{\cdot}min/m^2$ ausgeführt wird.

**7.** Bildaufzeichnungsverfahren nach einem der Ansprüche 1 bis 6, wobei die erste Tintenzusammensetzung ferner ein Fluortensid umfasst und ein Gehalt an dem Fluortensid 0,005 Masse% bis 0,02 Masse%, bezogen auf die Gesamtmenge der ersten Tintenzusammensetzung, beträgt.

**8.** Bildaufzeichnungsverfahren nach einem der Ansprüche 1 bis 6, wobei die erste Tintenzusammensetzung ferner ein Silikontensid umfasst und ein Gehalt an dem Silikontensid 0,005 Masse% bis 0,3 Masse%, bezogen auf die Gesamtmenge der ersten Tintenzusammensetzung, beträgt.

**9.** Bildaufzeichnungsverfahren nach einem der Ansprüche 1 bis 6, wobei die erste Tintenzusammensetzung ferner ein Kohlenwasserstofftensid umfasst und ein Gehalt an dem Kohlenwasserstofftensid 0,005 Masse% bis 0,3 Masse%, bezogen auf die Gesamtmenge der ersten Tintenzusammensetzung, beträgt.

**10.** Bildaufzeichnungsverfahren nach einem der Ansprüche 1 bis 6, wobei die erste Tintenzusammensetzung ferner ein Tensid umfasst und das Tensid ein Tensid mit einer vernetzbaren Gruppe ist.

**11.** Bildaufzeichnungsverfahren nach einem der Ansprüche 1 bis 10, wobei ein Gehalt an der chiralen Verbindung in der ersten Tintenzusammensetzung unterschiedlich ist zu einem Gehalt an der chiralen Verbindung in der zweiten Tintenzusammensetzung.

**12.** Bildaufzeichnungsverfahren nach einem der Ansprüche 1 bis 11, wobei jede der ersten Tintenzusammensetzung und der zweiten Tintenzusammensetzung zwei oder mehr Arten von polymerisierbaren Flüssigkristallverbindungen umfasst.

**13.** Bildaufzeichnungsverfahren nach einem der Ansprüche 1 bis 12, wobei das Substrat ein lichtabsorbierendes Substrat ist.

**14.** Bildaufzeichnungsverfahren nach Anspruch 13, wobei eine Absorbanz des Substrats an sichtbarem Licht 50% oder mehr beträgt.

**15.** Bildaufzeichnungsverfahren nach einem der Ansprüche 1 bis 14, wobei ein Gehalt an einem organischen Lösungsmittel mit einem Siedepunkt von 80°C bis 300°C in der ersten Tintenzusammensetzung 30 Masse% oder mehr, bezogen auf die Gesamtmenge an dem organischen Lösungsmittel in der ersten Tintenzusammensetzung beträgt und
ein Gehalt an einem organischen Lösungsmittel mit einem Siedepunkt von 80°C bis 300°C in der zweiten Tintenzusammensetzung 30 Masse% oder mehr, bezogen auf die Gesamtmenge an dem organischen Lösungsmittel in der zweiten Tintenzusammensetzung beträgt.

**Revendications**

**1.** Procédé d'enregistrement d'image, comprenant les étapes suivantes :

une étape pour préparer au moins deux compositions d'encre incluant une première composition d'encre, laquelle comprend un composé de cristaux liquides polymérisable, un composé chiral, un initiateur de polymérisation, et un solvant organique, et une deuxième composition d'encre, laquelle comprend un composé de cristaux liquides polymérisable, un composé chiral, un initiateur de polymérisation, et un solvant organique,
une étape pour appliquer la première composition d'encre sur un substrat par un procédé d'enregistrement par jet d'encre ;
une étape pour former un premier film d'encre en irradiant la première composition d'encre appliquée sur le substrat avec un rayon d'énergie active ;
une étape pour appliquer la deuxième composition d'encre sur le premier film d'encre par un procédé d'enregistrement par jet d'encre, et
une étape pour former un deuxième film d'encre en irradiant la deuxième composition appliquée sur le premier film avec un rayon d'énergie active,
dans lequel le premier film d'encre présente un angle de contact d'hexadécane inférieur ou égal à 45°.

**2.** Procédé d'enregistrement d'image selon la revendication 1, dans lequel une troisième composition d'encre, laquelle comprend un composé de cristaux liquides polymérisable, un composé chiral, un initiateur de polymérisation, et un solvant organique est en outre préparée lors de l'étape pour préparer au moins deux compositions d'encre, et le procédé d'enregistrement d'image comprend en outre les étapes suivantes :

une étape pour appliquer la troisième composition d'encre sur le deuxième film d'encre par un procédé d'enregistrement par jet d'encre ;
une étape pour former un troisième film d'encre en irradiant la troisième composition d'encre appliquée sur le deuxième film d'encre avec un rayon d'énergie active,
dans lequel le deuxième film d'encre présente un angle de contact d'hexadécane inférieur ou égal à 45°.

**3.** Procédé d'enregistrement d'image selon la revendication 1 ou 2,
dans lequel le premier film d'encre présente un angle de contact d'hexadécane allant de 3° à 25°.

**4.** Procédé d'enregistrement d'image selon l'une quelconque des revendications 1 à 3,
dans lequel l'étape pour former un premier film d'encre est une étape pour former un premier film d'encre en irradiant la première composition d'encre appliquée sur le substrat avec un rayon d'énergie active, puis en réalisant un traitement de lyophilisation sur un film durci de la première composition d'encre.

**5.** Procédé d'enregistrement d'image selon la revendication 4,
dans lequel le traitement de lyophilisation est au moins un type de traitement sélectionné parmi le groupe consistant en un traitement corona, un traitement au plasma, et un traitement à l'ozone et aux ultraviolets.

**6.** Procédé d'enregistrement d'image selon la revendication 5,
dans lequel le traitement corona est réalisé sur une quantité de décharge allant de 70 $W{\cdot}min/m^2$ à 500 $W{\cdot}min/m^2$.

**7.** Procédé d'enregistrement d'image selon l'une quelconque des revendications 1 à 6,

dans lequel la première composition d'encre comprend en outre un tensio-actif fluoré, et
une teneur en tensio-actif fluoré s'étend de 0,005 % en masse à 0,02 % en masse par rapport à une quantité totale de la première composition d'encre.

**8.** Procédé d'enregistrement d'image selon l'une quelconque des revendications 1 à 6,

dans lequel la première composition d'encre comprend en outre un tensio-actif siliconé, et
une teneur en tensio-actif siliconé s'étend de 0,005 % en masse à 0,3 % en masse par rapport à une quantité totale de la première composition d'encre.

**9.** Procédé d'enregistrement d'image selon l'une quelconque des revendications 1 à 6,

dans lequel la première composition d'encre comprend en outre un tensio-actif hydrocarboné, et
une teneur en tensio-actif hydrocarboné s'étend de 0,005 % en masse à 0,3 % en masse par rapport à une quantité totale de la première composition d'encre.

**10.** Procédé d'enregistrement d'image selon l'une quelconque des revendications 1 à 6,

dans lequel la première composition d'encre comprend en outre un tensio-actif, et
le tensio-actif est un tensio-actif présentant un groupe réticulable.

**11.** Procédé d'enregistrement d'image selon l'une quelconque des revendications 1 à 10,
dans lequel une teneur du composé chiral dans la première composition diffère d'une teneur du composé chiral dans la seconde composition d'encre.

**12.** Procédé d'enregistrement d'image selon l'une quelconque des revendications 1 à 11,
dans lequel chacune des première composition d'encre et seconde composition d'encre comprend deux composés de cristaux liquides polymérisables, ou davantage.

**13.** Procédé d'enregistrement d'image selon l'une quelconque des revendications 1 à 12,
dans lequel le substrat est un substrat absorbant la lumière.

**14.** Procédé d'enregistrement d'image selon la revendication 13,
dans lequel une absorbance de lumière visible du substrat est supérieure ou égale à 50%.

**15.** Procédé d'enregistrement d'image selon l'une quelconque des revendications 1 à 14,

dans lequel une teneur d'un solvant organique présentant un point d'ébullition allant de 80 °C à 300 °C dans la première composition d'encre est supérieure ou égale à 30% en masse par rapport à une quantité totale du solvant organique dans la première composition d'encre, et
une teneur d'un solvant organique présentant un point d'ébullition allant de 80 °C à 300 °C dans la seconde composition d'encre est supérieure ou égale à 30% en masse par rapport à une quantité totale du solvant organique dans la seconde composition d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017010560 A
- WO 2017057316 A
- WO 2017007007 A
- US 4683327 A
- US 5622648 A
- US 5770107 A
- WO 9522586 A
- WO 9524455 A
- WO 9700600 A
- WO 9823580A A
- WO 9852905 A
- JP 1272551 A
- JP H01272551 A
- JP 6016616 A
- JP H0616616 A
- JP 7110469 A
- JP H07110469 A
- JP 11080081 A
- JP H1180081 A
- JP 2001328973 A
- JP 57165480 A
- JP S57165480 A
- JP 60132767 A


### Non-patent literature cited in the description


- *Makromol. Chem.,* 1989, vol. 190, 2255
- *Advanced Materials,* 1993, vol. 5, 107
- Chiral Agent for TN and STN. Liquid Crystal Device Handbook. 1989, 199